# EUROPEAN PATENT SPECIFICATION

(11) **EP 3 285 127 B1**
(45) Date of publication and mention of the grant of the patent: **14.04.2021**
(21) Application number: 17178555.3
(22) Date of filing: 29.06.2017
(51) Int. Cl.: G05B 23/02, G05B 19/418

(54) **REMOTE INDUSTRIAL AUTOMATION SITE OPERATION IN A CLOUD PLATFORM**
ENTFERNTER INDUSTRIELLER AUTOMATISIERUNGSSTANDORTBETRIEB IN EINER CLOUD-PLATTFORM
OPÉRATION À DISTANCE D'UN SITE D'AUTOMATISATION INDUSTRIELLE PAR UNE PLATE-FORME CLOUD

(30) Priority: 19.08.2016 US 201615241354
(43) Date of publication of application: 21.02.2018
(73) Proprietor: Rockwell Automation Technologies, Inc., Mayfield Heights, OH 44124 (US)
(72) Inventor: BILLI-DURAN, Sharon M., Euclid, OH 44132 (US); COMO, Christopher W., Cagrin Falls, OH 44023 (US); GRAY, Edward A., Olmsted Township, OH 44138 (US); REISSNER, Kyle K., Hudson, OH 44236 (US); WALTER, Jonathan D., Broadview Hights, OH 44147 (US); SINGHAI, Mohit, Lyndhurst, OH 44124 (US); REICHARD, Douglas J., Fairview Park, OH 44126 (US); SANDLER, Scott N., Chagrin Falls, OH 44023 (US); BLISS, Ronald E., Twinsburg, OH 44087 (US); PANTALEANO, Michael J., Willoughby, OH 44094 (US); CAHALANE, Ryan, Chagrin Falls, OH 44023 (US); KORPELA, Jessica L., Milwaukee, WI 53207 (US); MCCLEAVE, Bruce T., Mission Viejo, CA 92692 (US)
(74) Representative: Grünecker Patent- und Rechtsanwälte PartG mbB

(56) References cited:
- EP-A1- 3 018 597
- EP-A2- 3 037 901
- CN-B- 103 543 700

## Description

### BACKGROUND

The subject matter disclosed herein relates generally to industrial automation systems. and, for example, to high-level or redundant control of such automation systems.

EP3037901 (A2) describes a cloud-based multi-tier cyber analytics system or integration of cloud-side and on-premise analytics for industrial systems. The analytics system includes an emulation runtime engine that executes a virtualized controller on a cloud platform. The runtime engine serves as a core analytics component by providing a control-level analytics engine with application programming interfaces that enable seamless interaction of distributed simulations, cloud level services, and hardware industrial controllers. A cloud-based framework integrates soft control, hard control, and simulation with cloud-level services, and includes components that facilitate near real-time data streaming from the plant floor to the cloud platform to yield an industrial Internet of Things.

CN103543700B describes a device control system arranged to monitor and control one or more interface devices such that the interface device can obtain and propagate sensor data from one or more connected physical devices including. During operation, the system can set up the interface device by establishing a network connection with the interface device and determine one or more rules for the interface device. A rule may indicate an operational description for making an operation and indicate a condition that indicates the criteria for handling the operational description of the rule. The system can set up interface devices to handle its associated rules. In embodiments, the system can include a backup controller that can be accessed over wide area network, which includes or is coupled to a mirror database. When a primary controller is offline, the backup controller can temporarily become the primary controller.

EP3018597 (A1) describes an industrial data indexing system that facilitates discovery and indexing of plant-wide data residing on multiple different data platforms. The indexing system automatically inventories industrial devices and other data sources located throughout a plant, and identifies available data items on each data source. The indexing system indexes the discovered data items in a federated data model that can subsequently be searched to locate data items or tags of interest. The federated data model records references to data items found on different types of data sources, including but not limited to industrial controller programs, human-machine interface applications, data historians, device documentation stores, inventory tracking systems, and other such data sources. The indexing system also discovers and records interdependencies between data items, which can be used to improve relevancy of search results returned to the user

It is the object of the present invention to provide an improved user interface allowing to develop control programs for remote industrial automation operation.

This object is achieved by the subject-matter of the independent claim.

Embodiments are defined by the dependent claims.

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments. a system for performing remote industrial automation operation is provided, comprising a device interface component configured to collect device data from industrial devices ut one or more industrial facilities and store the device data on cloud-based storage of a cloud platform; and a control component configured to execute a control program on the cloud platform using the device data as program variables, wherein the device interface component is further configured to send control instructions to at least one of the industrial devices based on outputs generated by the control program.

Also, one or more embodiments provide a method for remotely operating one or more industrial automation systems, comprising collecting, by system comprising at least one processor, device data from industrial devices deployed at one or more industrial facilities; storing, by the system, the device data on cloud-based storage of u cloud platform; processing, by the system, the device data using a control program that executes on the cloud platform; and sending, by the system, a control instruction to at least one of the industrial devices based on outputs generated by the control program.

Also, according to one or more embodiments, a non-transitory computer-readable medium is provided having stored thereon instructions that, in response to execution, cause a system to perform operations, the operations comprising collecting device data from industrial devices deployed at one or more industrial facilities; storing the device data on cloud-based storage of a cloud platform; executing a control program on the cloud platform that uses the device data as program inputs; and sending a control instruction to at least one of the industrial devices based on outputs generated by the control program.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 a high-level overview of an industrial enterprise that leverages cloud-based services.
FIG. 3 is a block diagram of an example remote industrial automation site operation system.
FIG. 4 is a high-level conceptual diagram illustrating remote industrial automation site operation services.
FIG. 5 is a diagram of an example architecture in which a remote site operation system performs remote operation services for multiple industrial facilities that are part of a larger industrial enterprise.
FIG. 6 is a diagram depicting a configuration in which an industrial device acts as a cloud gateway device for other industrial devices comprising an automation system.
FIG. 7 is a diagram depicting a configuration in which a firewall box acts as a cloud gateway device for other industrial devices comprising an automation system.
FIG. 8 is a diagram illustrating generalized data processing carried out by a control component on a cloud platform.
FIG. 9 is a block diagram that illustrates processing performed by an indexing subsystem of a cloud-based remote site operation system.
FIG. 10 is a diagram of an example smart device capable of self-reporting to a cloud-based indexing subsystem.
FIG. 11 is a block diagram illustrating transformation of discovered data by a transform component.
FIG. 12 is a diagram illustrating the use of a remote industrial site operation system to perform collective supervisory control of multiple geographically diverse facilities.
FIG. 13 is a diagram illustrating the use of a remote industrial site operation system to perform backup control operations.
FIG. 14 is a diagram illustrating an example implementation of a remote industrial automation site operation system whereby control of an industrial system is segregated between local control and cloud-based control.
FIG. 15 is a diagram illustrating configuration of controller data tags for selected local or cloud-based processing.
FIG. 16 is a diagram illustrating segregation of controller data based on the tag-level processing configuration.
FIG. 17 is a flowchart of an example methodology for remote operation of an automation system at an industrial site.
FIG. 18 is a flowchart of an example methodology for providing remote industrial control backup services.
FIG. 19 is an example computing environment.
FIG. 20 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical pins, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

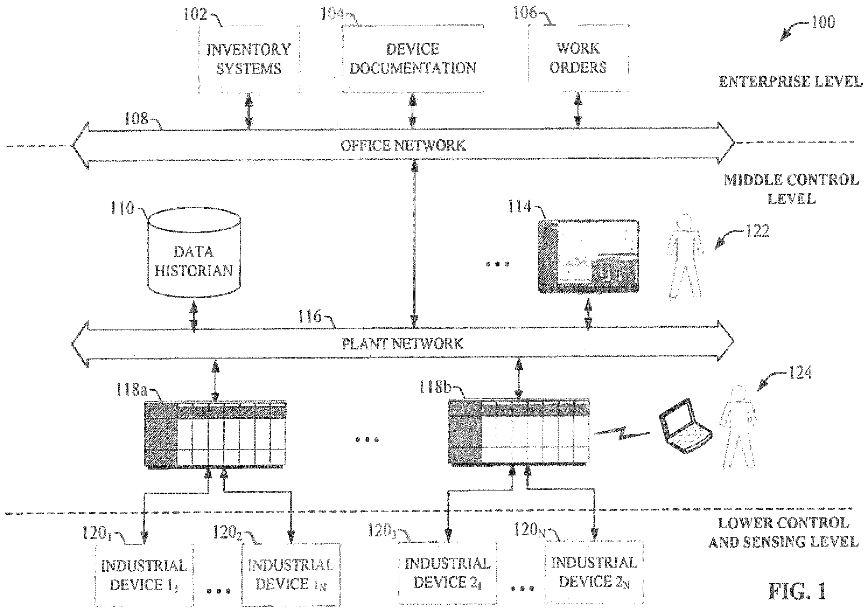

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial systems. One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the internet, intranets, Ethernet, DeviceNet, Control Net. Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, or a device documentation store 104 containing electronic documentation for the various industrial devices making up the controlled industrial systems. Other systems may include an inventory tracking system 102, a work order management system 106, repositories for machine or process drawings and documentation, vendor product documentation storage, vendor knowledgebases, internal knowledgebases, work scheduling applications, or other such systems, some or all of which may reside on an office network 108 of the industrial environment.

Many industrial enterprises distribute their operations across multiple geographically diverse plant facilities. While some or all of these distributed plant facilities may he designed to carry out respective industrial operations in the service of common high-level goals of the larger industrial enterprise, daily operations of the industrial automation systems at each facility are typically carried out substantially independently of one another due to the lack of information connectivity between geographically diverse systems, even though the high-level goals of the industrial enterprise may be better served through more coordinated operation between the automation systems.

Moreover, some industrial systems are located in remote environments that cannot be easily accessed, such as oil rigs, certain waste water facilities, automation systems associated with mining operations, or other such environments Because of the limited accessibility to these remote environments, implementing control program changes or control system maintenance for automation systems in such areas is challenging.

To address these and other issues, one or more embodiments of the present disclosure provide a cloud-hased remote industrial automation site operation system that leverages the wide array of configuration and operational data generated by the industrial assets of an industrial enterprise to facilitate remote industrial automation site operation. According to one or more embodiments, selected sets of operational data generated by one or more industrial assets (e.g., industrial controllers or other such devices) is migrated to a cloud platform that executes remote site operation services, which performs substantially real-time control functions for one or more plant-side automation systems from the cloud platform. By transferring some or all control functions to the cloud platform, which is accessible from multiple plant facilities. the cloud-based services can allow geographically diverse industrial systems to be collectively controlled together using a centralized, cloud-based virtual controller. The cloud-based system can also provide control backup services, allowing control of important automation systems to be switched from a local controller to the cloud-based control in the event of a failure at the local controller.

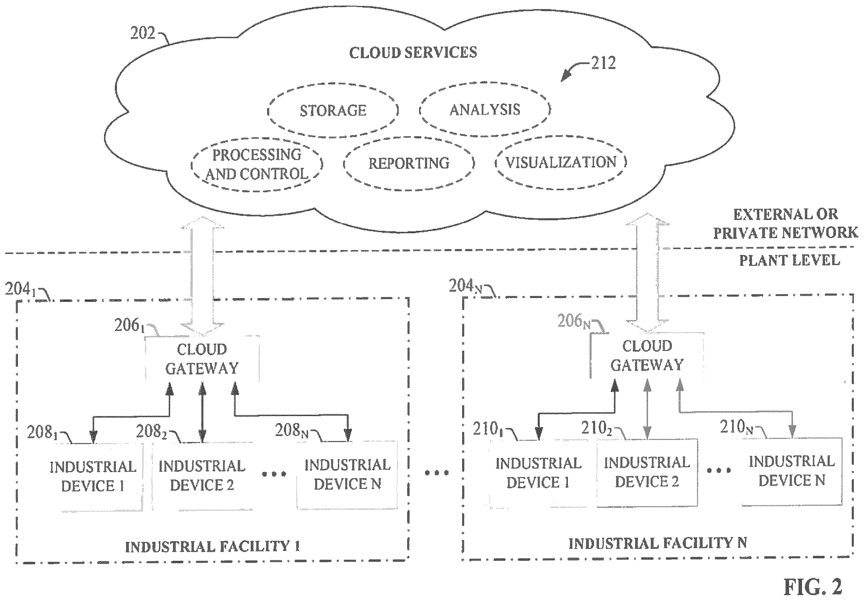

FIG. 2 illustrates a high-level overview of an industrial enterprise that leverages cloud-based services, including the remote site operation services described herein. The enterprise comprises one or more industrial facilities 204, each having a number of industrial devices 208 and 210 in use. The industrial devices 208 and 210 can make up one or more automation systems operating within the respective facilities 204. Example automation systems can include, but are not limited to, batch control systems (e.g., mixing systems), continuous control systems (e.g., PID control systems), or discrete control systems. Industrial devices 208 and 210 can include such devices as industrial controllers (e.g., programmable logic controllers or other types of programmable automation controllers); field devices such as sensors and meters; motor drives; human-machine interfaces (HMIs); industrial robots, barcode markers and readers; vision system devices (e.g., vision cameras); smart welders; or other such industrial devices.

Example automation systems can include one or more industrial controllers that facilitate monitoring and control of their respective processes. The controllers exchange data with the field devices using native hardwired I/O or via a plant network such as Ethernet/IP, Data Highway Plus, ControlNet, Devicenet, or the like. A given controller typically receives any combination of digital or analog signals from the field devices indicating a current state of the devices and their associated processes (e.g., temperature, position, part presence or absence, fluid level, etc.), and executes a user-defined control program that performs automated decision-making for the controlled processes based on the received signals. The controller then outputs appropriate digital and/or analog control signaling to the field devices in accordance with the decisions made by the control program. These outputs can include device actuation signals, temperature or position control signals, operational commands to a machining or material handling robot, mixer control signals, motion control signals, and the like. The control program can comprise any suitable type of code used to process input signals read into the controller and to control output signals generated by the controller, including but not limited to ladder logic, sequential function charts, function block diagrams, structured text, or other such platforms,

Although the example overview illustrated in FIG. 2 depicts the industrial devices 208 and 210 as residing in stationary industrial facilities 204, the industrial devices may also be part of a mobile control application, such as a system contained in a truck or other service vehicle.

According to one or more embodiments of this disclosure, industrial devices 208 and 210 can be coupled to a cloud platform to leverage cloud-based applications. That is, the industrial device 208 and 210 can he configured to discover and interact with cloud-based computing services 212 hosted by cloud platform 202. Cloud platform 202 can be any infrastructure that allows shared computing services 212 to be accessed and utilized by cloud-capable devices. Cloud platform 202 can be a public cloud accessible via the Internet by devices having Internet connectivity and appropriate authorizations to utilize the services. Alternatively, cloud platform 202 can be a private cloud operated internally by the enterprise. An example private cloud can comprise a set of servers hosting the cloud services 212 and residing on a corporate network protected by a firewall.

Cloud services 212 can include, but are not limited to, data storage, data analysis, control applications (e.g., applications that can generate and deliver control instructions to industrial devices 208 and 210 based on analysis of near real-time system data or other factors), visualization applications such as cloud-based HMIs, reporting applications, Enterprise Resource Planning (ERP) applications, notification services, or other such applications. If cloud platform 202 is a web-based cloud, industrial devices 208 and 210 at the respective industrial facilities 204 may interact with cloud services 212 via the Internet. In an exemplary configuration, industrial devices 208 and 210 may access the cloud services 212 through separate cloud gateway devices 206 at the respective industrial facilities 204, where the industrial devices 208 and 2 10 connect to the cloud gateway devices 206 through a physical or wireless local area network or radio link. In another exemplary configuration, the industrial devices may access the cloud platform directly using an integrated cloud interface.

Providing industrial devices with cloud capability can offer a number of advantages particular to industrial automation. For one, cloud-based storage offered by the cloud platform can be easily scaled to accommodate the large quantities of data generated daily by an industrial enterprise. Moreover, multiple industrial facilities at different geographical locations can migrate their respective automation data to the cloud for aggregation, collation, collective analysis, and enterprise-level reporting without the need to establish a private network between the facilities. Industrial devices 208 and 210 having smart configuration capability can be configured to automatically detect and communicate with the cloud platform 202 upon installation at any facility, simplifying integration with existing cloud-based data storage, analysis, or reporting applications used by the enterprise. In another example application, cloud-based diagnostic applications can monitor the health of respective automation systems or their associated industrial devices across an entire plant, or across multiple industrial facilities that make up an enterprise. Cloud-based lot control applications can be used to track a unit of product through its stages of production and collect production data for each unit as it passes through each stage (e.g., barcode identifier, production statistics for each stage of production, quality test data, abnormal flags, etc.). These industrial cloud-computing applications are only intended to be exemplary, and the systems and methods described herein are not limited to these particular applications. The cloud platform 202 can allow builders of industrial applications to provide scalable solutions as a service, removing the burden of maintenance, upgrading, and backup of the underlying infrastructure and framework.

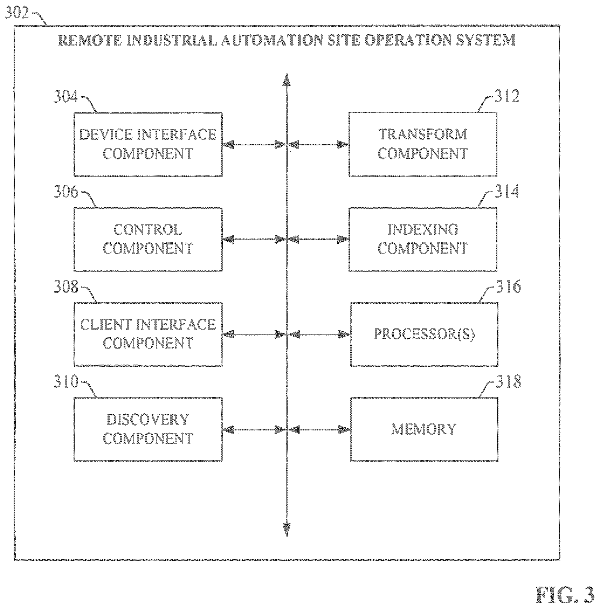

FIG. 3 is a block diagram of an example remote industrial automation site operation system 302 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computers), computing device(s), automation device(s), virtual machine(s), etc., can cause the machine(s) to perform the operations described.

Remote industrial automation site operation system 302 can include a device interlace component 304, a control component 306, a client interface component 308, a discovery component 310, a transform component 312, an indexing component 314, one or more processors 3 16, and memory 318. In various embodiments, one or more of the device interface component 304, control component 306, client interface component 308, discovery component 310, transform component 312, indexing component 314, the one or more processors 316, and memory 318 can be electrically and/or communicatively coupled to one another to perform one or more of the functions of the remote industrial automation site operation system 302. In some embodiments, components 304, 306, 30S, 310, 312, and 314 can comprise software instructions stored on memory 318 and executed by processor(s) 316. Remote industrial automation site operation system 302 may also interact with other hardware and/or software components not depicted in FIG. 3. For example, processcr(s) 316 may interact with one or more external user interface devices, such as a keyboard, a mouse, a display monitor, a touchscreen, or other such interface devices.

The device interface component 304 can be configured to exchange information between the remote industrial automation site operation system 302 one or more industrial devices or cloud gateway devices located at one or more industrial plant facilities. In some embodiments, device interface component 304 can exchange data with the industrial devices (e.g., industrial controllers, telemetry devices, motor drives, quality check systems, etc.) via the plant networks on which the devices reside, as well as via a public network such a:s the Internet. The device interface component 304 can directly access the data generated by these industrial devices via the one or more public and/or private networks in some embodiments. Alternatively, the device interface component 304 can access the data on these industrial devices via a proxy or gateway device that aggregates the data from multiple industrial devices for migration to the cloud platform via the device interface component. The data received by the device interface component 304 is stored on cloud-based storage associated with the remote site operation system 302 for processing by the control component 306.

The control component 306 can be configured to execute one or more industrial control programs or algorithms based on the industrial data collected by the device interface component 304. These control programs may include, for example, a supervisory control program designed to perform high-level control coordination between multiple automation systems at multiple different plant facilities. The control programs may also be redundant backup versions of control programs being executed at the plant facilities on one or more industrial controllers. In yet another example, the control programs may include a control program segment that performs a portion primary control of an industrial machine or process located at a remote industrial facility. The control component 306 can also be configured to perform other related functions, including but not limited to generating and delivering alarm notifications, or logging selected data items from data sources at the plant facility on cloud-based storage.

Client interface component 308 can be configured to exchange information between the remote site operation system 302 and a client device having authorization to access the system. For example, the client interface component 308 can receive from the client device control programming to be executed by the system for remote automation control of one or more industrial facilities, as well as other configuration information. The client interface component 308 can also be configured to deliver information to the client device, including but not limited to interface displays that render configuration views of the remote site operation system, or operational or statistical views relating to remote operation of the industrial facilities.

The discovery component 310 can be configured to detect available data items located on one or more industrial devices distributed across one or more plant facilities. The transform component 312 can be configured to transform the data retrieved by the device interface component 304. This can include, for example, transforming heterogeneous data items discovered on different types of data platforms to a homogeneous format for collective processing by the control component 306. In some embodiments, the transform component 312 may also tag the retrieved data with relevant contextual information - e.g., a plant, production area, machine, or device from which the data was received; a relationship or interdependency between a given data item and another data item; or other data modifications. The transform component 312 may also be configured to transform information about data items discovered by the discovery component 310 so that the information identifying the data items can be indexed in a federated data model.

Indexing component 3 14 can be configured to generate a federated data model defining locations and sources of data items throughout the industrial system, as well as relationships between the data items, based on the data discovered by the discovery component 310. The one or more processors 316 can perform one or more of the functions described herein with reference to the systems and/or methods disclosed. Memory 318 can be a computer-readable storage medium storing computer-executable, instructions and/or information for performing the functions described herein with reference to the systems and/or methods disclosed.

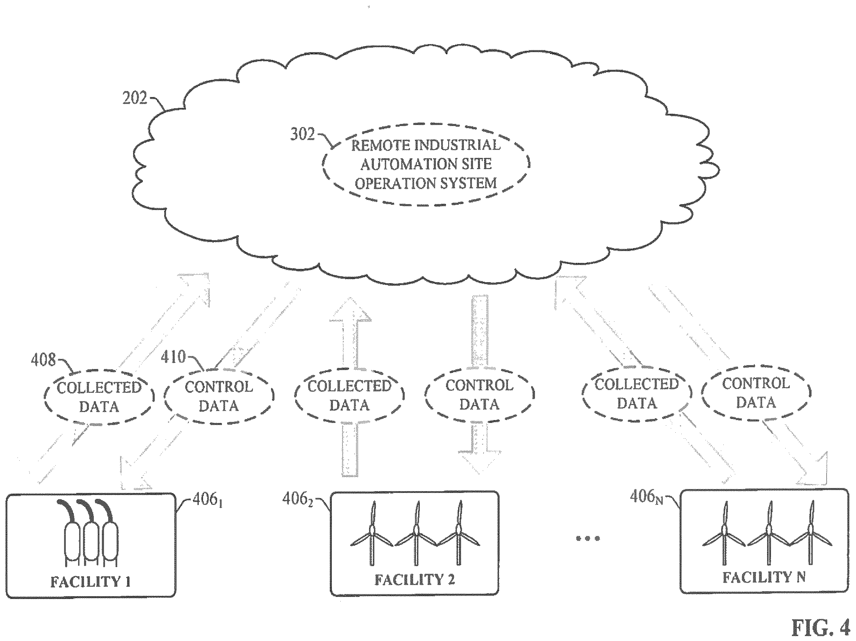

FIG. 4 is a high-level conceptual diagram illustrating remote industrial automation site operation services according to one or more embodiments of this disclosure. The remote industrial automation site operation system 302 described above can execute on cloud platform 202 to provide remote site operation services for an industrial enterprise. In the example depicted in FIG. 4 the industrial enterprise operates multiple geographically diverse plant facilities 406, which may be designed to carry out similar manufacturing tasks, or to carry out different tasks associated with common high-level goals of the larger industrial enterprise.

The remote site operation system 302 collects selected subsets of data 408 from automation systems operating at the facilities 406 and stores the collected data 408 on cloud-based storage. The collected data 408 can include, for example, selected data items generated by or stored on industrial controllers or other industrial devices that control respective machines or processes at the facilities; telemetry data from telemetry devices that measure process values for the controlled machines or processes; status data from one or more sensors, safety devices, control panel devices, or other types of input devices; or other such data. To facilitate substantially real-time remote control and operation of machines and/or processes at the industrial facilities 406, the data 408 can be collected continuously or at high-frequency collection rates.

Processing services executed by the remote site operation services can process the collected and stored data and issue control data 410 to the local automation systems based on results of the processing. In this regard, the remote site operation system 302 can execute one or more control programs using cloud-based processing and storage, using the collected data 408 as parameters or variable values. In this way, the cloud-based services perform substantially real-time control functions from the cloud platform. In an example implementation, the cloud-based control programming or routine may be a high-level supervisory control algorithm that executes in conjunction with the local automation control carried out at the plant facilities 406, allowing the geographically diverse industrial systems to be collectively controlled using a centralized, cloud-based virtual controller. In another implementation, the facilities may perform no localized control of their machines or processes, which are instead controlled exclusively by the cloud-based control services executed by the remote site operation system 302. In still another implementation, the remote site operation system 302 may provide redundancy services whereby control of the automation systems at the plant facilities 406 switches from the local controllers at the facilities 406 to the cloud-based controller services in the event that the local controllers experience a fault.

In some embodiments, to facilitate safe operations during cloud-based control of industrial systems on the plant floor, I/O modules of the local controller and/or associated sensors can support a configurable timeout sequence, whereby a detected loss of communication to the cloud platform causes the local controller or I/O devices to place the industrial system in a safe state (if control cannot be seamlessly transitioned to a local controller). For example, in the case of an industrial system comprising moving parts (e.g., a stamping press, a machining or material handling robot, etc.), when the local controller or I/O devices detect that communication to the cloud platform has been lost (or, more specifically, after communication has been lost for a defined timeout duration specified by the user), the local controller and/or I/O devices can execute a coordinated operating sequence that causes the moving parts of the system to move to a safe position, or to stop at their current locations. The safety sequence can also cause power to be removed from the moving parts to ensure user safety until reliable control can be resumed.

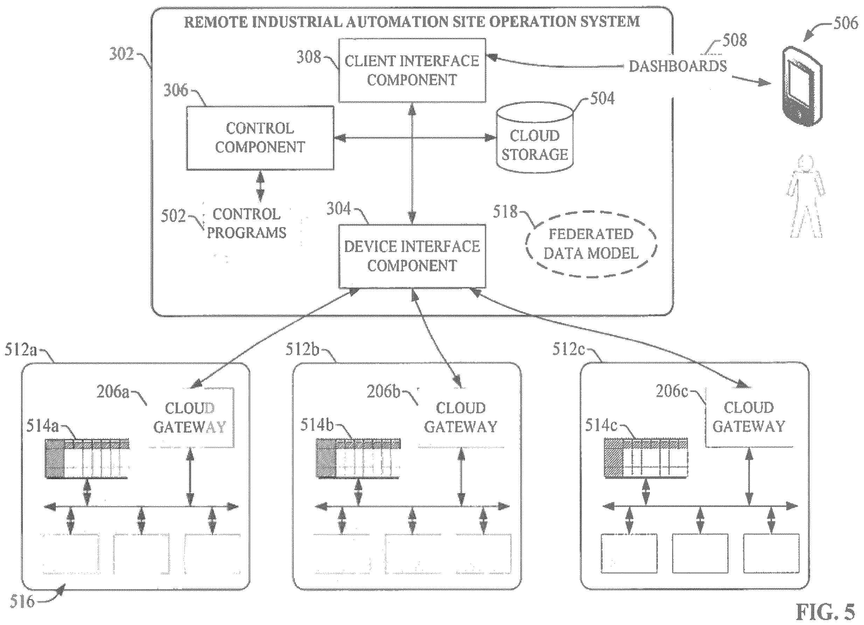

FIG. 5 is a diagram of an example architecture in which the remote site operation system 302 performs remote operation services for multiple industrial facilities that are part of a larger industrial enterprise. In this example, three plant facilities 512 are communicatively connected to the remote site operation system 302 via a connection to the cloud platform on which the system 302 operates. Each plant facility 512 includes one or more industrial automation systems and/or assorted industrial devices. These systems and devices may include industrial controllers 514 that perform local control of machines or processes on the plant floor, as well as other industrial devices 516, which may include input and output devices that exchange analog and digital data with the industrial controllers 514 (e.g., via hardwired connections, the plant network, or a remote I/O connection, etc.) motor drives (e.g., variable frequency drives or other types of motor drives), industrial safety devices (e.g. safety mats, light curtains, emergency stop pushbuttons or pull cords, image-based or camera-based safety devices, etc.), quality check systems (e.g., vision systems, strength test systems, etc.), or other such industrial devices.

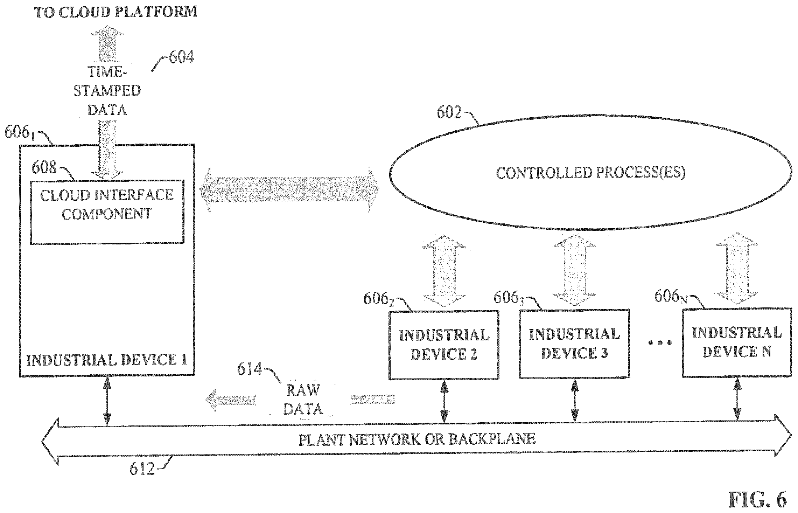

As noted above, device interface component 304 of the remote site operation system 302 is configured to receive data from one or more industrial devices 514 and/or 516. In some embodiments, the device interface component 304 can retrieve the data from each industrial device individually via the network layers (e.g., via a secure connection between the plant network and the public or private network on which the system 302 resides), where the selection of data items to he retrieved by the device interface component 304 is determined based on the needs of die control component 306 (to be described in more detail below). Alternatively, the industrial data front devices 514 and 516 can be sent to the cloud platform via one or more cloud gateway devices 206 located on the plant floor, which collect the required data items from one or more industrial devices and sends this data to the system 302 on the cloud platform. FIG. 6 depicts a configuration in which an industrial device acts as a cloud gateway device for other industrial devices comprising an automation system. An automation system comprises a plurality of industrial devices 606₁ - 506_{N} which collectively monitor and/or control one or more controlled processes 602. The industrial devices 606₁ - 606_{N} respectively generate and/or collect process data relating to control of the controlled process(es) 602. For industrial controllers such as PLCs or other automation controllers, this can include collecting data from telemetry devices connected to the controller's I/O. generating data internally based on measured process values, etc.

In the configuration depicted in FIG. 6. industrial device 606₁ acts as a cloud gateway for industrial devices 606₂ - 606_{N}, whereby raw data 614 from devices 606₂ - 606_{N} is sent to the cloud via gateway industrial device 606₁. Industrial devices 606₂ - 606_{N} can deliver their raw data 614 to proxy industrial device 606₁ over plant network or backplane 612 (e.g., a Common Industrial Protocol (CIP) network or other suitable network protocol). Using such a configuration, it is only necessary to interface one industrial device to the cloud platform (via a cloud interface component 608 of the gateway industrial device 606₁). In some embodiments, the cloud interlace component 608 of gateway industrial device 606₁ can apply time stamps to the collective raw data 614 collected from industrial devices 606₂ - 606_{N}, as well as its own control data. The time-stamped data can then be pushed to the cloud platform as lime-stamped data 604 via cloud interface component 608. To prevent misdirection of control, communication between the device interface component 304 on the cloud platform and the cloud interface component 608 can be secured and encrypted using any suitable communication security and data encryption techniques.

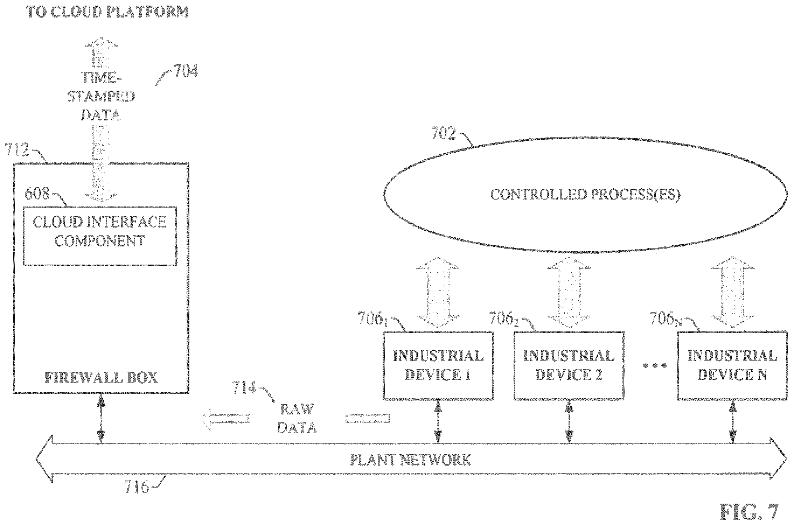

While the gateway device illustrated in FIG. 6 is depicted as an industrial device that itself performs monitoring and/or control of a portion of controlled process(es) 602, other types of devices can also be configured to serve as a cloud gateway device for multiple industrial devices according to one or more embodiments of this disclosure. For example, FIG. 7 illustrates an embodiment in which a firewall box 712 serves as a cloud proxy for a set of industrial devices 706₁ - 706_{N}. Firewall box 712 can act as a network infrastructure device that allows plant network 716 to access an outside network such as the Internet, while also providing firewall protection that prevents unauthorized access to the plant network 716 from the Internet. In addition to these firewall functions, the firewall box 712 can include a cloud interface component 608 that interfaces the firewall box 712 with one or more cloud-bused services (e.g., the remote site operation services provided by system 302). In a similar manner to gateway industrial device 606₁ of FIG. 6, the firewall box 712 can collect raw industrial data 714 from industrial devices 706₁ -706_{N}, which monitor and control respective portions of controlled process(es) 702. Firewall box 712 can also apply appropriate time-stamps to the gathered raw data 714 prior to pushing the data to the cloud-btised application as time-stamped data 704. Firewall box 712 can allow industrial devices 706₁ - 706_{N} to interact with the cloud platform without directly exposing the industrial devices to the Internet. In some embodiments, the firewall box 712 can include a security certificate that is used for data encryption for communication to the cloud.

In one or more embodiments, cloud interface component 708 can also receive data from the cloud-based application, and route this data to one or more of the industrial devices 706₁ - 706_{N}. As will be described in more detail below, this allows the remote site operation system 302 to send control data to the devices based on cloud-side processing of the collected industrial data.

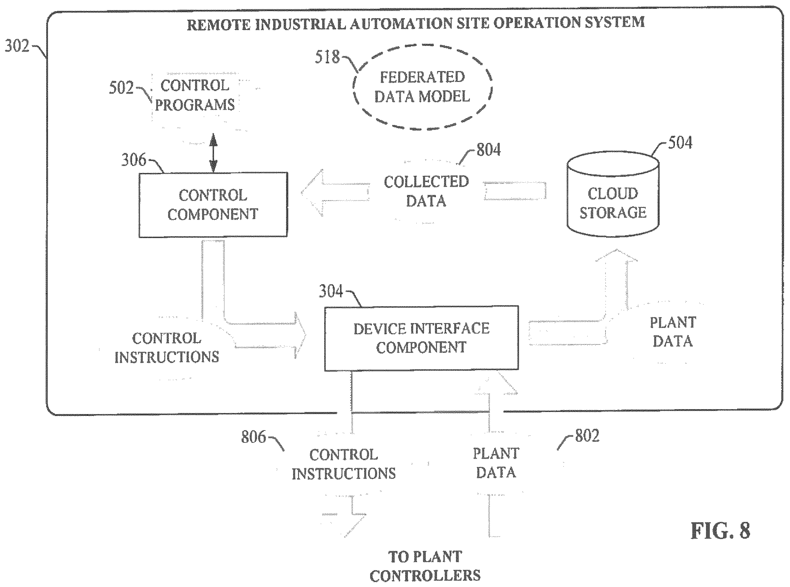

Returning to FIG. 5, industrial data received (or retrieved) by the device interface component 304 is moved to cloud storage 504 for processing by control component 306. In general, control component 306 acts as a cloud-based virtual controller that executes one or more control programs 502 using the collected and stored industrial data as parameters (e.g., as virtual I/O and calculated values for the virtual industrial controller executed by the control component). FIG. 8 is a diagram illustrating generalized data processing carried out by the control component 306. As noted above, plant data 802 from industrial devices located at one or more industrial facilities is collected by the device interface component 304 and stored in cloud storage 504. Cloud control component 306 executes one or more user-defined control programs 502 that process the data, and generates digital and/or analog output values based on the processing. In various embodiments, control component 306 supports execution of control programs 502 developed using any suitable programming language. For example, in some embodiments, control component 306 is configured to allow development of control programs 502 using e.g. a common industrial controller programming language (e.g., ladder logic, sequential function charts, etc.). In such embodiments, the control component 306 can be programmed remotely using a client device (e.g., client device 506 of FIG. 5) having suitable administrator authorization credentials to access and program the system 302. To facilitate programming of control component 306, client interface component 308 can be configured to serve suitable program development dashboards 508 to the client device 506. These dashboards 508 can include interactive programming tools that allow the user to develop control programs 502 that generate control outputs based on values of the stored plant data 802. These programs 502 are then stored on the cloud platform in association with the control component 306.

Control component 306 retrieves selected values of collected plant data 804 from cloud storage as required by control programs 502, and generates control instructions 806 based on the collected data 804 and the programming performed thereon. These control instructions 806 may take the form of digital or analog output values to be written to corresponding data tags or registers of the plant floor devices to initiate a local control action on the plant floor, to change a setpoint value or other process variable in an industrial controller, to initiate a notification to be directed to a plant employee, or other such control actions. The device interface component 304 sends the control instructions 806 to the appropriate devices on the plant floor from the cloud platform.

The control programs 502 is written to programmatically link a defined program input or output to a specified data register or data tag of an industrial device on the plant floor; e.g., by referencing a unique tag name associated with the data tag. In some embodiments, the control component 306 allows the user (via interaction with dashboards 508) to define the inputs and outputs of control programs 502 using hierarchical tag names that identify the location of the corresponding data item or tag on the plant floor within the larger industrial enterprise. For example, an input or output of a control program executed by control component 306 may be defined in terms of the enterprise name, the name of the plant facility in which the target device reside, the name of the industrial device containing the data tag, and the name of the data tag on the industrial device.

Also, in some embodiments, the program development tools provided by dashboards 508 may allow the program developer to define an input or output for a control program by browsing a hierarchical data tag list that defines the available data tags in terms of their hierarchical locations within the industrial enterprise. To facilitate discovery of the data tags available throughout the plant facilities, as well as to provide the device interface component 304 with communication pathway information for communicating with the respective data tags, one or more embodiments of system 302 can maintain a federated data model 518 that maps the available data tags under a common namespace, and defines the hierarchical locations of these tags within the larger industrial enterprise. To generate and maintain this data model 518, one or more embodiments of remote site operation system may include an indexing system configured to discover available data tags on industrial devices throughout the various plant facilities 512.

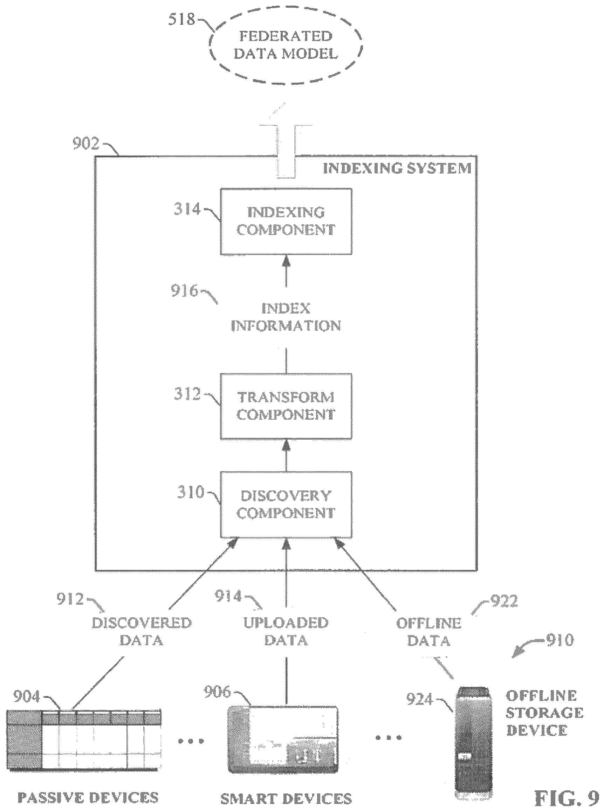

FIG. 9 is a block diagram that illustrates processing performed by the indexing system 902 of the remote site operation system 302. Each industrial environment corresponding to the respective facilities 512 may comprise a diverse, heterogeneous set of industrial devices 910. In order to unify the data available on these sources under a common namespace to facilitate communication between the cloud-based system and specified data tags available on the industrial devices 910, a discovery component 310 is configured to discover data tags or registers in a number of ways. Some devices within the plant environment may be passive devices 904, which only provide information regarding their available data items in response to a request from the discovery component 310 of the indexing system 902. Such a request may be initiated by a discovery agent (not shown) deployed on the plant network by discovery component 310. The discovery agent may be, for example, a software script that crawls its assigned plant network to discover industrial devices containing available data items.

In an example scenario, when the discovery agent discovers a new industrial device 910 during traversal of the plant network, the agent will examine the device to identify the data items on that device that are eligible for indexing in the federated data model 518. If the discovered device is an industrial controller, for example, the available data items may comprise data tags or registers defined by the industrial controller's configuration and programming file. The discovery agent can also identify how and where the data items are used in the industrial controller's program (e.g., ladder logic, sequential function chart, structured text, etc.) so that this information can be indexed as well. For example, upon discovery of the industrial controller on the plant network, the discovery agent may subsequently identify a tag named *Tank1* defined in the controller's program file, representing a particular tank of an industrial batch process. In response to discovering this tag, the discovery agent can scan the control program to identify the routines and program locations (e.g., ladder logic rungs) on which *Tank1* is referenced. The discovery agent can also identify how each instance of *Tank1* is used at each program location (e.g., output coil, normally open contact, function block argument, etc.).

The discovery agent may additionally identify other data items defined in the industrial controller that have a functional relationship with *Tank1.* For example, upon identifying a reference to *Tank1* on an output coil of a rung of the control program running on the industrial controller, the discovery agent can then identify the other data values and statuses defined on that rung that control the state of the *Tank1* output coil, and record this relationship between *Tank1* and each of the other data values and statuses. In some embodiments, the discovery agent can perform additional scans of the control program to determine additional data values and statuses that affect the states of each of the related data items, since those additional data values/statuses also affect the status of the *Tank1* output coil. The discovery agent may iteratively cycle through the control program multiple times in this fashion in order to discover all relevant data items having a functional relationship with Tank1. In some embodiments, the discovery agent can also scan cloud-based virtual controllers (e.g., virtual controllers implemented by control component 306) for relevant information, and record associations between this cloud-based control data and other on-premise devices at the plant site. For example, a cloud-based virtual controller may generate alarm information for one or more controlled devices of an automation system. This alarm information can be discovered by the discovery agent; e.g. by scanning the cloud-based virtual controller in a similar manner to that used to scan local controllers at the plant facility.

In another example, the discovered device may be an interface terminal executing an HMI application for visualizing a controlled process. In this scenario, the discovery agent may identify the terminal and proceed to scan the tag list defined in the HMI application to identify the data tags referenced by the HMI. These data items can include HMI tags linked to data tags of a networked industrial controller for display of associated controller data values or statuses on one or more of the HMI screens, or for writing values to the controller tags via an input object rendered on an HMI screen (e.g., a data entry field, a virtual push-button, etc.). For each discovered HMI tag, the discovery agent can identify the display screens on which the HMI tag is registered, as well as the external controller tags corresponding to the HMI tag. In some scenarios, the HMI tag may be identified by the same name as the corresponding controller tag (e.g., *Tank1*)*,* although this may not always be the case.

The discovery agent can package the information collected as described above - including an identity of the device and its type (e.g., industrial controller, HMI, motor drive, etc.), data items discovered on the device, locations of the data items within an application running on the device (e.g., routine and rung of a ladder logic program. HMI screen, etc.), correlations between the data items, etc. - and send this information back to the discovery component 310 as discovered data 912. Since the discovery agent is capable of performing appropriate analysis on a number of different types of data platforms (e.g., industrial controller, HMI, etc.) in order to identify the data platform and its available data, the discovery agent may pre-format the discovered data 912 to conform a formal compatible with the remote site operation system 302 prior to returning the discovered data 912 to the discovery component 310. In this way, the discovery component 310 and its associated discovery agent can automatically normalize heterogeneous data from diverse data formats into a common, homogeneous formal that can be collectively processed and indexed by the indexing system.

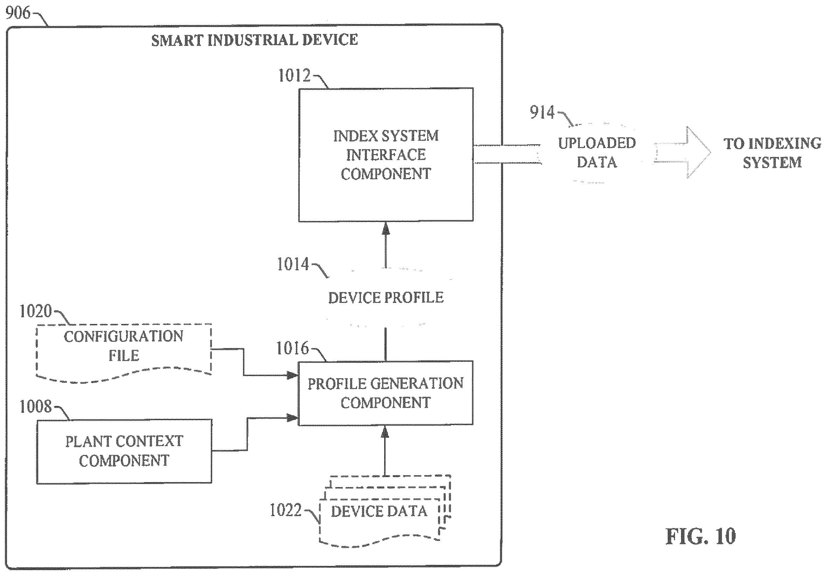

In addition to passive devices 904, the industrial facility may include one or more smart devices 906 having integrated self-reporling functionality. Such devices can provide uploaded data 914 regarding their identity and available data items to the indexing system 902 directly without the need for analysis by a discovery agent. Turning to FIG. 10, an example smart device capable of self-reporting to indexing system 902 is illustrated. Smart device 906 - which may comprise substantially any type of industrial device (e.g., an industrial controller, an HMI terminal, a motor drive, etc.) - includes an index system interface component 1012 configured to communicatively couple smart device 906 to the indexing system 902 and exchange data therewith; e.g., via a plant network or over a public network such as the Internet.

When smart device 906 is installed as part of an industrial automation system, index system interface component 1012 can establish communication with the indexing system 902. In one or more embodiments, the index system interface component 1012 can be configured to auto-discover the indexing system 902 on the common network. For example, the smart device 906 may be pre-configured with the identification of the indexing system to which the device is to provide its identity and configuration information (e.g., a name associated with the indexing system, a machine identifier, a cloud or web address, etc.), or may be configured to perform a search of the plant network for compatible industrial indexing systems that may be present on the network. Any suitable handshaking protocol may be used to establish communication between the smart device 906 and the indexing system.

Upon discovery of the indexing system, the smart device 906 can package and send relevant information about the device and its available data items or tags to the indexing system 902, which integrates the reported data items in federated data model 518. In some embodiments, a profile generation component 1016 can generate a device profile 1014 for smart device 906 to be sent to the indexing system 902 via index system interface component 1012. Device profile 1014 can convey information about smart device 906, including but not limited to an identity and type of the device, readable and/or writable device data items 1022 available on the device, a context of the device within the industrial environment, any built-in displays or dialog screens (e.g., HTML pages) that provide access to the device's data, etc. In some embodiments, profile generation component 1016 may collect configuration information encoded in a configuration file 1020 stored on the smart device 906, which may be a control program, a configuration or parameters settings file, an application file (e.g., an HMI application or HTML page), or other such file. The profile generation component 1016 can also identify available device data items 1022 on the device (e.g., real-time or historical data tags, etc.). In some embodiments, the profile generation component 1016 can also identify relationships between the data items using techniques similar to those used by the discovery agent, including but not limited to the iterative relationship discovery process described above. The profile generation component 1016 can package this information into a device profile 1014, which is then sent to the indexing system as uploaded data 914 by index system interface component 1012.

Some embodiments of smart device 906 may also include a plant context component 1008 configured to collect additional contextual information about the smart device 906 for delivery to indexing system 902. Plant context component 1008 can determine a context of smart device 906 within the plant or enterprise environment. For example, one or more embodiments of plant context component 1008 can identify other devices and systems within its local environment and make a determination regarding a location of smart device 906 within a hierarchical enterprise context or device topology. Some embodiments of the federated data model 518 may represent a given industrial enterprise in terms of multiple hierarchical levels and device hierarchies, where each level comprises units of the enterprise organized as instances of types and their properties. For example, a given data item may be tagged in the data model 518 with hierarchical location data identifying the location of origin of the data item in terms of the following increasingly granular hierarchical levels - a plant facility, a work area within the facility, a production line within the work area, a machine within the production line, and a device associated with the machine. These levels are only intended to be exemplary, and it is to be appreciated that other combinations of hierarchical levels are within the scope of one or more embodiments of this disclosure.

Plant context component 1008 can gather information that facilitates locating its associated smart device 906 within an organizational or device hierarchy in a number of ways. In one example, plant context component 1008 can identify a topology of devices sharing a common network with smart device 906 and interconnections between the devices. For example, if smart device 906 is an industrial controller, plant context component 1008 can identify one or more discrete or analog I/O devices connected to the controller (e.g. based on a configuration file 1020 that defines the I/O module configurations for the controller). In addition, plant context component 1008 can identify other controllers on the network and their role within the overall industrial enterprise (e.g., the production areas, workcells, or processes associated with the respective controllers). In some embodiments, plant context component 1008 can also determine an identity of a particular network (e.g., a network name) to which smart device 906 is attached. This information can be leveraged (either by profile generation component 1016 or an external application) to determine the device's location and role within the industrial enterprise, since some networks may be dedicated to a particular production area. Some embodiments of plant context component 1008 may also identify a type of machine to which smart device 906 is connected (e.g., a palletizer, wrapper, conveyor, etc.).

By gathering information about the local device topology, plant context component 1008 can facilitate identifying a location of smart device 906 within the enterprise hierarchy. In some embodiments, this determination of the location within the enterprise hierarchy can be made by plant context component 1008 itself. Alternatively, profile generation component 1016 can include information gathered by plant context component 1008 in device profile 1014 so that the indexing system 902 can accurately represent smart device 906 within the enterprise or device hierarchy.

Returning to FIG. 9, the indexing system 902 may also collect data 922 about certain industrial devices rather than gather information about the devices directly from the devices themselves. In this regard, some industrial devices may have information about their configuration, programming, and available data items captured and stored as offline files stored on separate offline file storage devices 924. Accordingly, one or more embodiments of the discovery agent can identify and process these offline files in a similar manner as described above in order to index these devices in the federated data model.

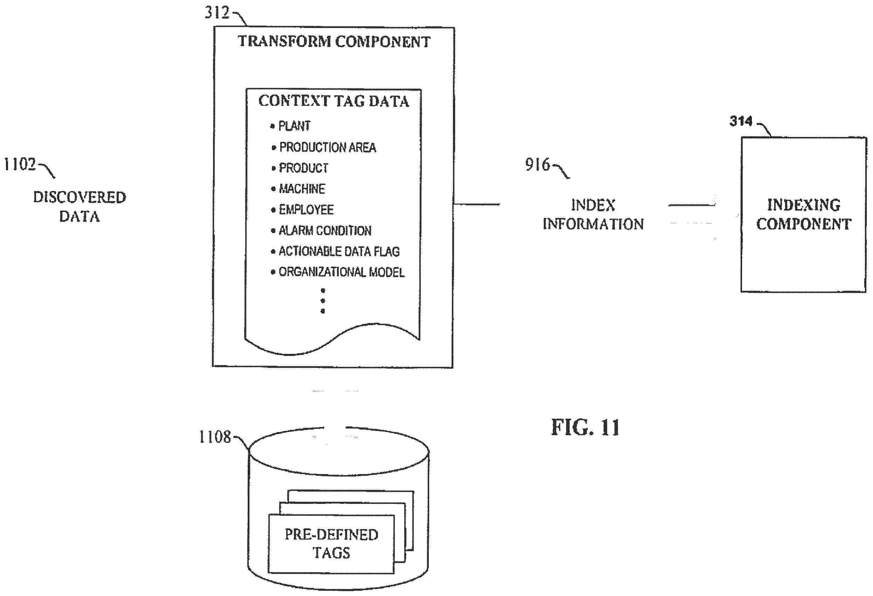

Transform component 312 can perform any necessary transformation on the information collected by the discovery component prior to indexing. This can include, for example, normalizing any data that was not appropriately formatted by the discovery agent, so that all collected information about the discovered data items or tags accords to a common format usable by the indexing system 902. In some embodiments, transform component 312 can also add contextual data to the collected data tag information to achieve highly granular indexing for search and communication purposes, as well as to facilitate subsequent discovery of interdependencies between the diverse and plant-wide data items. FIG. 11 is a block diagram illustrating transformation of discovered data 1102 by transform component 312. As noted above, the discovery agent (or discovery component 310) may add some contextual information to the information identifying the discovered data items prior to sending the index information to transform component 312. However, in some cases the transform component 312 may be able to add additional context to this data based on information not available to the discovery agent. In other scenarios, the discovery agent may not have been able to contextualize all the discovered data due to limited available information about a given device (e.g., in the case of an older legacy device with limited capabilities).

Contextual data that can be added by transform component 318 for a given data item can include, but is not limited to, an identifier of a plant and/or production area at which the source of the data item resides; a machine or product to which the data item relates; one or more employees to be associated with the data item (e.g., based on the production area, shift during which the data item was collected, etc.); a concurrent alarm condition determined to be relevant to the discovered data item; an actionable data flag indicating that the value of the collected data item requires a response from plant personnel; or a tag indicating the location of the data time within the context of a hierarchical organizational model of the plant (e.g., in terms of an enterprise level, plant level, work area level, machine level, control level, etc.).

In some embodiments, the transform component 312 can selectively tag discovered data items with one or more pre-defined tags 1108 defined in association with the indexing system 902. These tags may be used to contextualize the discovered data based on one or more user-defined tag categories based on tagging rules. For example, the user may define a tagging rule indicating that data collected from industrial devices within a particular workcell or machine of the plant are to be tagged with a pre-defined tag that associates the data items with a person, product, or other classifier for indexing and searching purposes. The tags 1108 allow the user to define relationships between data items that may not be automatically discoverable by the discovery component 3 10 and its associated discovery agents.

In some embodiments, the transform component 312 may also auto-generate tags for a given data item based on contextual information, including but not limited to rung comments associated with a controller tag, learned interdependencies between a newly discovered data item and a previously discovered data item (e.g., the transform component 312 may learn that *Pump5* is associated with *Tank1*, and tag *Pump5* as being associated with *Tank1*, or tag both *Tank1* and *Pump5* according to the larger system in which they operate), or other discovered contextual information. The indexing component 314 can associate similarly tagged data items in the federated data model 518 regardless of the platform in which they were discovered. For example, the indexing component 314 can associate common or related data items discovered, respectively, in an industrial controller, an HMI, and a data historian.

Returning now to FIG. 9, the transform component 312 provides the index information 916 identifying the discovered data item and any associated contextual information to indexing component 314, which indexes the discovered data and interdependencies therebetween in federated data model 518, The remote automation site operation system 302 can then leverage the information indexed in federated data model 518 for a variety of purposes. According to the invention, the client interface component 308 generates a hierarchical browsable search tree display for browsing available data tags and render this search tree display on one or more dashboards 508 for display on client device 506. The user can then browse this hierarchical search tree during development of control programs 502 to locate desired data items or tags to be associated with selected program variables, inputs, and outputs of the control programs. In another example, device interface component 304 can leverage information contained in the federated data model 518 to determine communication pathways to the respective data items or tags. For example, the values of programmatic outputs of the control programs 502 (e.g., ladder logic output coils, analog output variables whose values are controlled by the control programs, etc.) can be continually or periodically written to the corresponding data tags on the plant floor devices by the device interface component 304. To facilitate this communication, the device interface component 304 may reference the indexed data tag information maintained in federated data model 518 to determine the communication paths to the corresponding data tags on the plant floor.

In some high availability systems (e.g., systems with redundant communication channels.), there may be multiple communication paths to certain devices and the data items thereon. For example, some systems may include two cloud gateways that both serve a common set of devices on the plant floor, and the cloud-based system may send requests for data items over both channels substantially simultaneously. In such embodiments, the on-premise device receiving the multiple requests over the two channels may be configured to determine that the requests are redundant (i.e., represent the same request for a data item), and only respond to one of these requests with the requested data item. ON the cloud side, the indexing system may be aware of the duplicate communication path to the data tag, and store this information in such a way that the path and the data tag information are separate but linked.

In order to facilitate real-time control of plant-side automation systems from the cloud platform, the device interface component 304 can be configured to retrieve and store industrial data from the plant-side industrial devices substantially continuously, or at a high update frequency. This ensures that cloud-side control of the plant floor systems is performed with low latency.

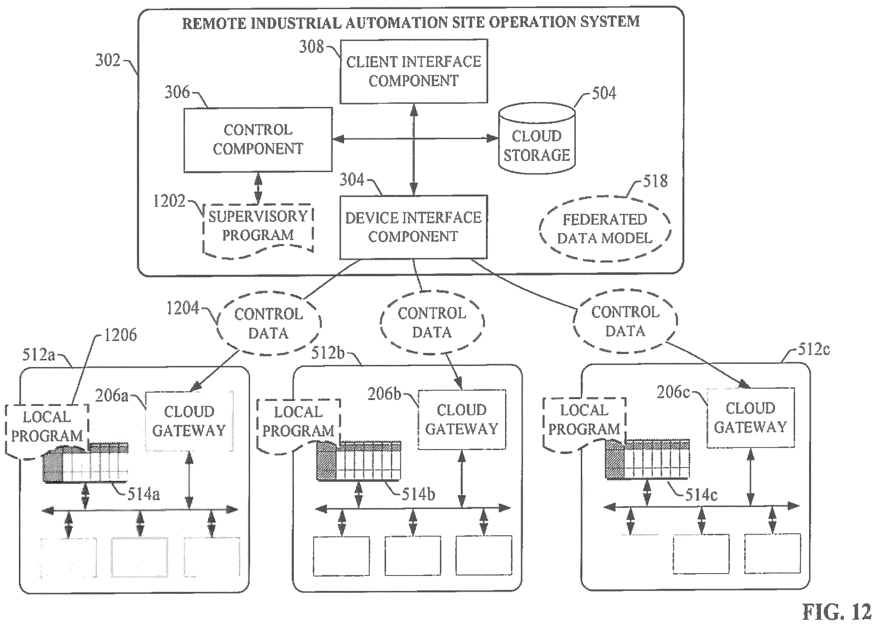

The architecture described above for performing cloud-based remote operation of plant-level automation systems can be leveraged in a number of different ways. FIG. 12 is a diagram illustrating the use of the remote site operation system 302 to perform collective supervisory control of multiple geographically diverse facilities. In this example, the multiple industrial facilities 512 are owned by a common industrial enterprise. Automation systems at the respective industrial facilities 512 perform manufacturing, processing, or other types of tasks in the service of high-level goals of the enterprise. For example, the facilities 512 may be manufacturing plants that produce respective different components of a product to be assembled at one of the facilities 512. In the case of an automotive enterprise, one of the facilities 512 may operate stamping presses and welding systems that manufacture sheet metal parts for an automobile, while another of the facilities 512 may perform die-casting, machining, and assembly processes that manufacture engine blocks for the automobiles. The components produced at these facilities may be shipped to another of the facilities 512 for final assembly. Other types of industrial enterprises may include, but are not limited to, food and drug, oil and gas, mining, textiles, or types of industries.

Conventionally, although there may be dependencies between operations at the various facilities 512 - e.g., the production rate at one facility depends on a supply of parts produced at another facility; the rate at which parts are to be produced at one facility depends on the rate at which those parts are being used at another facility; etc. - coordination of operations between the facilities is typically reliant upon human communication between the plants, a technique that does not allow operations at a given facility to immediately react to real-time operational statuses at other plants.

The architecture described above, and illustrated in FIG. 12, can facilitate substantially real-time coordination between operations at the respective facilities. In this example, each facility 512 includes one or more industrial controllers 514 that interact with input and output devices of respective automation systems to carry out local control of one or more automation systems. Accordingly, each industrial controller 514 executes a local program 1206 (e.g., a ladder logic program, a sequential function chart, etc.) installed on the controller and designed to control the automation system associated with the controller.

During operation, the device interface component 304 on the cloud platform collects values of respective data items from the controllers and/or other industrial devices located at the facilities. To facilitate substantially real-time control, the device interface component 304 collects these data values substantially continuously, or at a high update frequency. In this example the control component 306 executes a supervisory program 1202 that collectively processes the plant floor data and generates control data 1204 directed to the respective facilities based on results of the processing. The supervisory program 1202 may be designed to perform high-level coordination between operations at the respective facilities 512 based on the real-time data collected from the local devices, as described in previous examples.

The device interface component 304 can determine which plant-side data items to collect for storage and processing based on the requirements of the supervisory program 1202. For example, the device interface component 304 can determine which of the plant-side data items are referenced by the supervisory program 1202 as inputs, and collect those referenced data items from the appropriate local devices at the facilities 512 in order to provide supervisory program 1202 with the appropriate input values. For the control (output) data, the device interface component 304 can determine the which data tag corresponds to each of the digital and analog output values defined by supervisory program 1202, and send the values of those output to their appropriate data tags or registers in the plant-side industrial devices (e.g., controllers 514) using device interface component 304. Depending on the configuration, the device interface component 304 can send these values either directly to the respective plant floor devices, or via cloud gateway devices 206 at the respective facilities.

This configuration yields a two-layer control architecture, whereby immediate control functions of the automation systems at facilities 512 are controlled locally by programs that execute on local controllers 514, while higher-level, collective control of the automation systems is performed by the remote site operation system 302 using control component 306 executing supervisory program 1202. Users can design supervisory program 1202 to manage substantially any high-level goal of the industrial enterprise that requires coordination between the facilities 5 12. For example, the cloud-based supervisory program 1202 may be configured to regulate a production rate of a manufacturing line at one of the facilities 512 based on a measured rate of part production at an upstream facility, of a measured demand at a downstream facility. Such changes in production rate may be carried out, for example, by writing a new setpoint value to a data tag in one of the local controllers that sets a speed of a production line.

In another example of cloud-based supervisory control of a locally controlled process, a local device, a controller or other device on the plant floor may carry out an autonomous control of a local automation system; e.g., a proportional-integral-derivative (PID) loop control of a motion system. As this local control is executed, the local control device can send time-stamped status and operational values relating to control of the local automation system to the cloud-hased control system (e.g., loop tuning parameter values, current speed and position of the motion system, current or predicted control output signals generated by the local controller, etc.) Based on these values, the cloud controller can predict a future status (e.g., position, velocity, etc.) or trajectory of the motion system, and generate new control setpoint values or other control parameters for the local controller based on these predicted statuses, in anticipation of where the motion system will be at a future time. The cloud-based system can then send these new setpoint or control values to the local controller.

As noted above, to allow data from multiple geographically diverse input points to be correlated and proper event ordering determined (thereby ensuring accurate coordination between the facilities), the industrial data can be time-stamped and converted to a common time standard as the data is moved from the plant floor to the cloud-based remote site operation system 302. In some embodiments, the data may be time-stamped by the device interface component 304 using a common clock associated with the system 302. Alternatively, the data may be stamped by the plant-floor devices (or gateway devices) prior to moving the data to the cloud platform. In the latter scenario, system 302 may synchronize the internal clocks of the plant floor devices that will be moving data to the cloud platform, to ensure that the relative times between events that occur at geographically diverse facilities are accurately represented.

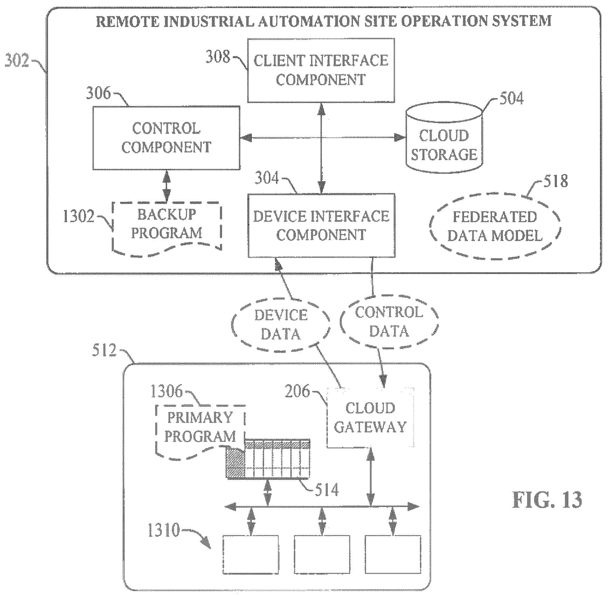

The cloud-based remote site operation architecture can also be used to implement control redundancy to ensure that plant-floor operations are not interrupted in the event of a failure of the local controller, FIG. 13 is a diagram illustrating the use of the remote site operation system 302 to perform backup control operations. In this example, local controller 514 at the plant facility 512 executes a primary control program 1306 to facilitate control of an automation system 1310 operating in the facility. On the cloud platform, remote site operation system 302 maintains a redundant backup version of the primary program as backup program 1302. During normal operation, control of the automation system 1310 is carried out exclusively by local controller 514 in accordance with primary program 1306. During this time, device interface component 304 may collect and store data from the facility 512 as described in previous examples (e.g., via gateway device 206, or via direct communicative path to the respective industrial devices), even though control component 306 is not performing control during this time. This can ensure a rapid or substantially seamless transition from local control to cloud-based control. In some alternative embodiments, migration of data from the facility 5 12 to the cloud may not occur during normal operation; rather, the device interface component 304 will begin collecting data when a failure of the industrial controller 514 is detected and cloud-based control begins.

In the event of a failure of local controller 514, the remote site operation system 302 on the cloud platform assumes remote control of the automation system 1310 using control component 306 executing backup program 1302. In an example embodiment, remote site operation system 302 may detect such a failure by remotely monitoring one or more health statistics of the local controller 514 (e.g., a run mode register on the controller, one or more fault registers on the controller, etc.). Upon detection of the failure, device interface component 304 can begin collecting data from the industrial devices (if this data was not already being collected during normal operation), and control component 306 begins sending control data to the automation system devices at the facility 512 based on processing performed on the collected device data by the backup program 1302. The control data sent by the remote site operation system, comprising digital and analog values set by backup program 1302, may be linked to appropriate data registers of one or more industrial devices that make up the automation system (e.g., motor drives, actuation systems, etc.). Some of the control data values may be linked to control registers of remote I/O modules on the plant floor that have hardwired links to I/O devices that would otherwise be controlled by the local controller 514 during normal operation. In this way, the cloud-based remote site operation system provides reliable active backup services for industrial automation systems at any location with access to the cloud platform.

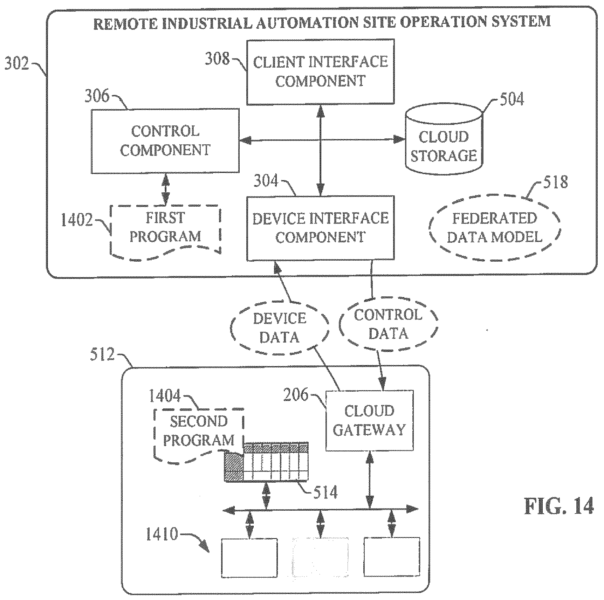

FIG. 14 is a diagram illustrating another example implementation of remote industrial automation site operation system 302, whereby control of an industrial system is segregated between local control and cloud-based control. In this example, control of an automation system at facility 512 is divided between the local controller 5 14 and the cloud-based remote site operation system 302. To this end, a first control program 1402 for control of selected portions of the automation system or process is executed on the cloud platform by control component 306. while a second control program 1404 is executed locally at the facility 512 by local controller 514. This implementation allows the user to relegate selected control operations to cloud-based control, while assigning other control functions to local control. For example, the user may wish to assign control functions having relatively low criticality to cloud-based control, while assigning more crucial control functions to local control. In another example, a subset of control functions may depend upon collective analysis of operations of multiple different automation systems (possibly at multiple different facilities), as described above in connection with FIG. 12. That is, certain control functions may depend upon current operating statuses of one or more other automation systems as a result of dependencies between the automation systems. Accordingly, this subset of control operations may be handled by the first program 1402 executing on the cloud platform, while other control operations that do not depend upon collective analysis of other automation systems are handled by the second program 1404 executing locally at the facility 512.

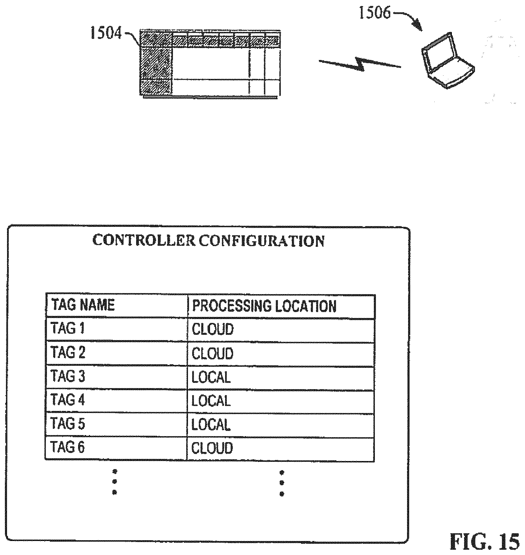

In some embodiments, the architecture described above can allow the user to segment or partition data items or control functions in terms of where the data or functions are to he processed (e.g., on the local controller or in the cloud platform). These selections can be made by tagging the data items or routines on the local controller using the control program development environment FIG. 15 is a diagram illustrating configuration of controller data tags for selected local of cloud-based processing. In this example, a program development application is installed on client device 1506 (e.g., a laptop computer, a desktop computer, a tablet computer, a portable phone, etc.), which interfaces with an industrial controller 1504 over a wired or wireless connection to facilitate configuring and programming the controller. As part of the controller configuration process, the user defines and configures a number of data tags representing the I/O values and calculated values used by the control program. The control program development application allows the user to define a number of attributes for each data tag, including but not limited to a tag name, a data type associated with the tag, a physical l/O point of the controller corresponding to the data tag (in the case of I/O data tags), alarm preferences, and other such attributes.

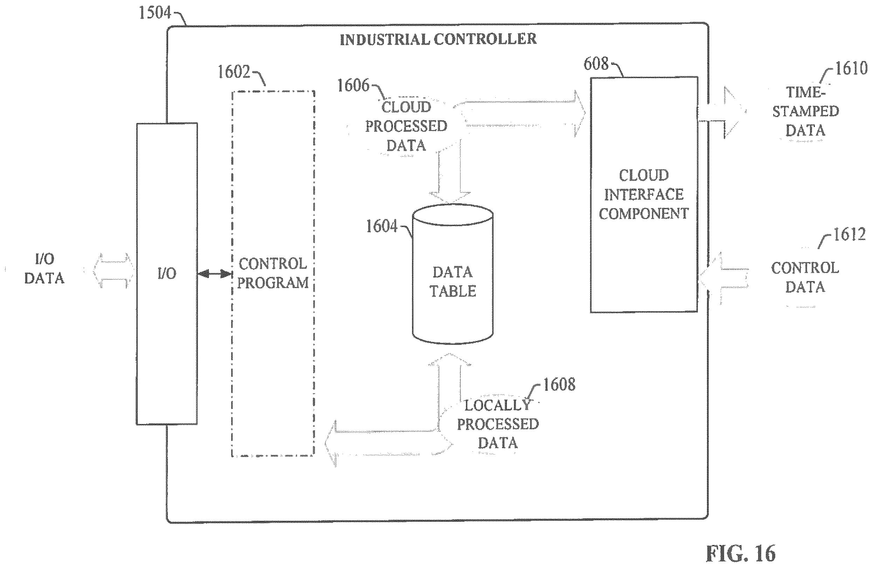

Additionally, the control program development application also allows the user to indicate whether the data tag is to be processed locally on the industrial controller or, alternatively, by the control component 306 of remote site operation system 302. In some embodiments (as depicted in FIG. 15), the development application may allow the user to specify a processing location for the respective data tags, where the processing location defines whether primary processing for the data tag is to be performed on the local controller or in the cloud platform. In such embodiments, tags that are configured for LOCAL processing will be processed using the local control program on the industrial controller during default (normal) operating conditions, but may switch to cloud-based processing in the event of a controller failure. Tags configured for CLOUD processing will have their values migrated to the remote site operation system 302 for cloud-based processing. FIG. 16 is a diagram illustrating segregation of controller data based on the tag-level processing configuration. As shown in this figure, data 1608 that has been tagged for local processing is read from the controller's data table 1604 by locally executed control program 1602 for local processing, and new data table values are written to the data table 1604 by the local program 1602 based on this local processing. Other data 1606 that has been tagged lor cloud-based processing is sent to the cloud platform for remote processing. In embodiments in which data migrated to the cloud is time-stamped locally by the controller, the controller's cloud interface component 608 time-stamps the data prior to sending the data to the cloud to yield time-stamped data 1610 (alternatively, the data may be time-stamped by the device interface component when the data is received on the cloud platform). Output values generated by the cloud-based program based on the time-stamped data from the controller 1504 are sent to the controller as control data 1612, as described in previous examples.

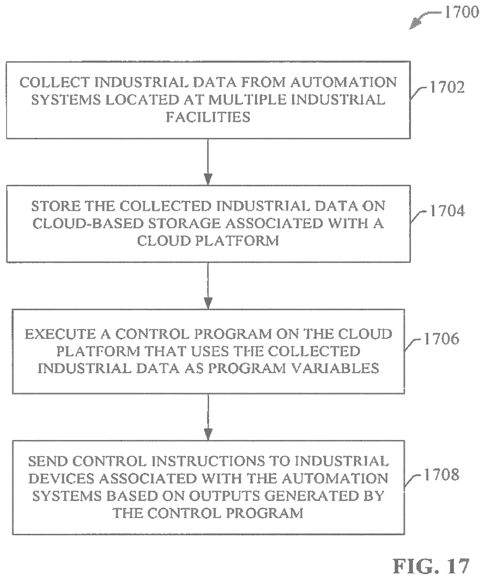

FIGs 17-18 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 17 illustrates an example methodology 1700 for remote operation of an automation system at an industrial site. Initially, at 1702, industrial data is collected from automation systems located at multiple industrial facilities. At 1704, the collected industrial data is stored on cloud-based storage associated with a cloud platform. Various techniques can be used to collect and store the industrial data. For example, a device interface component executing on the cloud platform can remotely access the data residing on various industrial devices associated with the automation systems via a proxy or gateway device that aggregates the data from one or more industrial devices for migration to the cloud platform. Alternatively, the device interface component may retrieve some or all of the industrial data directly from the industrial devices themselves. In some embodiments, the cloud platform can communicate with the gateway devices or industrial devices via a secure communicative connection to a plant network or wireless network on which the devices reside.

At 1706, a control program is executed on the cloud platform using the collected industrial data as program variables. Any suitable programming language for development of the cloud-based control program is within the scope of one or more embodiments of this disclosure. For example, the cloud-based system may allow the cloud-based control program to be developed using a common industrial controller programming language, including but not limited to ladder logic, sequential function charts, function block diagrams, structured text, or other such platforms. To facilitate program development, some embodiments of the cloud-based system can include a client interface component that serves program development interface displays to remote client devices (e.g., laptop computers, tablet computers, desktop computers, phones, etc.) to facilitate development of the cloud-based control program. During execution, the control program can retrieve data values from the cloud storage corresponding to defined program variables (e.g., data values corresponding to discrete and analog I/O values generated by plant-floor industrial devices, telemetry values generated by meters associated with the automation systems, operator input values indicating statuses of control panel devices or HMI input values, etc.), and generate discrete and/or analog output values based on the collected data values in accordance with the control program.

At 1708, control instructions are sent to one or more of the industrial devices associated with the automation systems based on the outputs generated by the cloud-based control program. The cloud-based system may send these control instructions to the industrial devices directly via the plant network, or may send the instructions by way of the gateway devices if such gateway devices are used to interface the industrial devices to the cloud platform. The control instructions may comprise, for example, digital values that instruct an industrial device to initiate a particular action or operating mode, analog setpoint values, messages directed to an operator on the plant floor, or other such instructions.

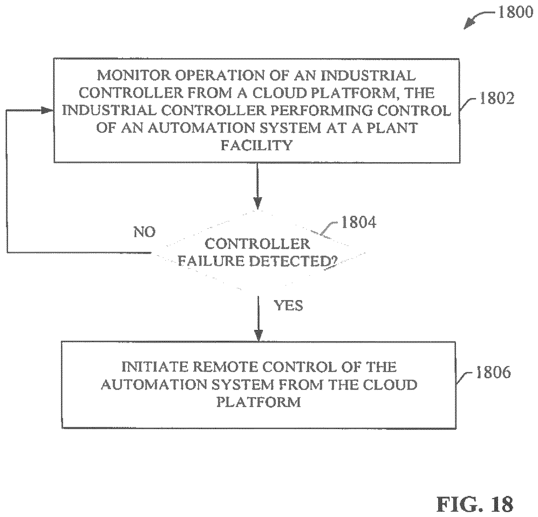

FIG. 18 is an example methodology 1800 for providing remote industrial control backup services. Initially, at 1802, operations of an industrial controller are monitored from a cloud platform, where the industrial controller performs control of an automation system at a plant facility. For example, a remote site operation system executing on the cloud platform can remotely access and read one or more of the industrial controller's data registers indicative of a health status of the controller. At 1804, a determination is made regarding whether a failure of the industrial controller is detected based on the monitoring performed at step 1802. If no failure is detected (NO at step 1804), the methodology returns to step 1802 and remote monitoring of the controller continues. Alternatively, if a controller failure is detected (YES at step 1804), the methodology proceeds to step 1 806, where remote control of the automation system from the cloud platform is initiated. To facilitate substantially seamless transition to remote operation, a backup instance of the control program executing on the industrial controller can be stored on the cloud platform. When control of the automation system transitions to remote cloud-based control, the cloud-based system can collect and store data from one or more industrial devices that make up the automation system in substantially real-time and execute the redundant version of the control program using the collected industrial device data as program parameters. Outputs generated by the redundant version of the control program can be sent to the appropriate industrial devices to facilitate remote operation of the automation system from the cloud platform.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can he shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, instrumentation, and human machine interface (HMI) that communicate via the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, near field communication (NFC), Bluetooth, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

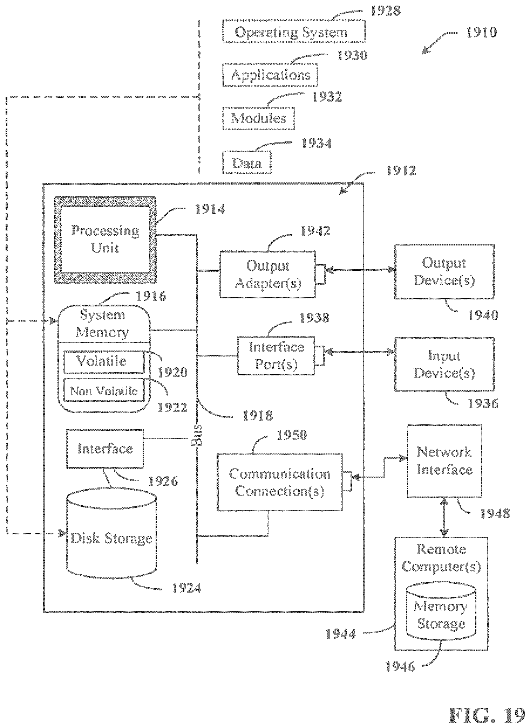

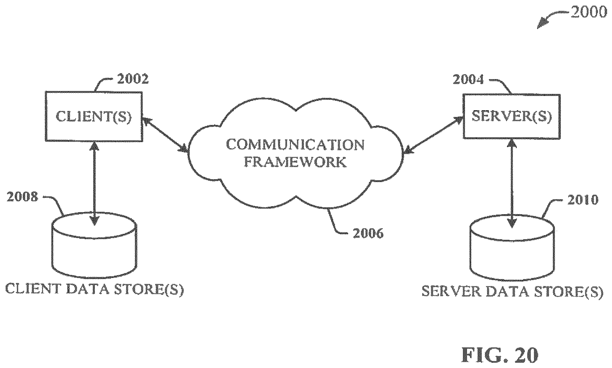

In order to provide a context for the various aspects of the disclosed subject matter, FIGs. 19 and 20 as well as the following discussion are intended to provide a brief, general description of a suitable environment in which the various aspects of the disclosed subject matter may be implemented.

With reference to FIG. 19, an example environment 1910 for implementing various aspects of the aforementioned subject matter includes a computer 1912. The computer 1912 includes a processing unit 1914, a system memory 1916, and a system bus 1918. The system bus 1918 couples system components including, but not limited to, the system memory 1916 to the processing unit 1914. The processing unit 1914 can be any of various available processors. Multi-core microprocessors and other multiprocessor architectures also can be employed as the processing unit 1914.

The system bus 1918 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1916 includes volatile memory 1920 and nonvolatile memory 1922. The basic input/output system (BIOS), containing the basic routines to transfer information between elements within the computer 1912, such as during start-up, is stored in nonvolatile memory 1922. By way of illustration, and not limitation, nonvolatile memory 1922 can include read only memory (ROM), programmable ROM (PROM), electrically programmable ROM (EPROM), electrically erasable PROM (EEPROM), or flash memory. Volatile memory 1920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM). Synchlink DRAM (SLDRAM), and direct Rambus RAM (DRRAM).

Computer 1912 also includes removable/non-removable, volatile/nonvolatile computer storage media. FIG. 19 illustrates, for example a disk storage 1924. Disk storage 1924 includes, but is not limited to, devices like a magnetic disk drive, floppy disk drive, tape drive, Jaz drive, Zip drive, LS-100 drive, flash memory card, or memory stick. In addition, disk storage 1924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1924 to the system bus 1918, a removable or non-removable interface is typically used such as interface 1926.

It is to be appreciated that FIG. 19 describes software that acts as an intermediary between users and the basic computer resources described in suitable operating environment 1910. Such software includes an operating system 1928. Operating system 1928, which can be stored on disk storage 1924, acts to control and allocate resources of the computer 1912, System applications 1930 take advantage of the management of resources by operating system 1928 through program modules 1932 and program data 1934 stored either in system memory 1916 or on disk storage 1924. It is to be appreciated that one or more embodiments of the subject disclosure can be implemented with various operating systems or combinations of operating systems.

A user enters commands or information into the computer 1912 through input device(s) 1936. Input devices 1936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1914 through the system bus 1918 via interface port(s) 1938. Interface port(s) 1938 include, for example, a serial port, a parallel port, a game port, and a universal serial bus (USB). Output device(s) 1940 use some of the same type of ports as input device(s) 1936. Thus, for example, a USB port may be used to provide input to computer 1912, and to output information from computer 1912 to an output device 1940. Output adapters 1942 are provided to illustrate that there are some output devices 1940 like monitors, speakers, and printers, among other output devices 1940, which require special adapters. The output adapters 1942 include, by way of illustration and not limitation, video and sound cards that provide a means or connection between the output device 1940 and the system bus 1918. It should be noted that other devices and/or systems of devices provide both input and output capabilities such as remote computer(s) 1944.

Computer 1912 can operate in a networked environment using logical connections to one or more remote computers, such as remote computer(s) 1944. The remote computer(s) 1944 can be a personal computer, a server, a router, a network PC, a workstation, a microprocessor based appliance, a peer device or other common network node and the like, and typically includes many or all of the elements described relative to computer 1912. For purposes of brevity, only a memory storage device 1946 is illustrated with remote computer(s) 1944. Remote computer(s) 1944 is logically connected to computer 1912 through a network interface 1948 and then physically connected *via* communication connection 1950. Network interface 1948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL). Network interface 1948 can also encompass near field communication (NFC) or Bluetooth communication.

Communication connection(s) 1950 refers to the hardware/software employed to connect the network interface 1948 to the system bus 1918. While communication connection 1950 is shown for illustrative clarity inside computer 1912, it can also be external to computer 1912. The hardware/software necessary for connection to the network interface 1948 includes, for exemplary purposes only, internal and external technologies such as, modems including regular telephone grade modems, cable modems and DSL modems, ISDN adapters, and Ethernet cards.

FIG. 20 is a schematic block diagram of a sample computing environment 2000 with which the disclosed subject matter can interact. The sample computing environment 2000 includes one or more client(s) 2002. The client(s) 2002 can be hardware and/or software (e.g., threads, processes, computing devices). The sample computing environment 2000 also includes one or more server(s) 2004. The server(s) 2004 can also be hardware and/or software (e.g., threads, processes, computing devices). The servers 2004 can house threads to perform transformations by employing one or more embodiments as described herein, for example. One possible communication between a client 2002 and servers 2004 can be in the form of a data packet adapted to be transmitted between two or more computer processes. The sample computing environment. 2000 includes a communication framework 2006 that can be employed to facilitate communications between the client(s) 2002 and the server(s) 2004. The client(s) 2002 are operably connected to one or more client data store(s) 2008 that can be employed to store information local to the client(s) 2002. Similarly, the server(s) 2004 are operably connected to one or more server data store(s) 2010 that can he employed to store information local to the servers 2004.

What has been described above includes examples of the subject innovation. It is, of course, not possible to describe every conceivable combination of components or methodologies for purposes of describing the disclosed subject matter, hut one of ordinary skill in the art may recognize that many further combinations and permutations of the subject innovation are possible. Accordingly, the disclosed subject mutter is intended to embrace all such alterations, modifications, and variations that fall within the scope of the appended claims.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system (302) for performing remote industrial automation operation, comprising:
a memory that stores executable components;
a processor, operatively coupled to the memory, that executes the executable components, the executable components comprising:
a device interface component (304) configured to collect device data from industrial devices (208, 210) at one or more industrial facilities (204) and store the device data on cloud-based storage of a cloud platform (202);
a control component (306) configured to execute a control program (502) on the cloud platform (202) using the device data as program variables,
wherein the device interface component (304) is further configured to send control instructions to at least one of the industrial devices (208, 210) based on outputs generated by the control program (502);
a client interface component (308) configured to generate and send, to a client device (506), one or more interface displays that allow a user to develop the control program via interaction with the one or more interface displays, wherein the one or more interface displays allow the user to define inputs and outputs of the control program (502) using hierarchical tag names that identify the locations of data items of the one or more industrial facilities (204) corresponding to the tag names; and
an indexing system (902) configured to discover available data items distributed across the industrial devices (208, 210), and to record the discovered data items in a federated data model (518) on the cloud platform (202), wherein the one or more interface displays include a browsable hierarchical search tree display for browsing the hierarchical tag names,
wherein the client interface component (308) is configured to generate the browsable hierarchical search tree display from information indexed in the federated data model (518).

2. The system of claim 1, wherein the interface component (304) is configured to collect device data from industrial devices comprising industrial controllers that perform local control of respective automation systems, and the control program is configured to coordinate control operations performed by the industrial controllers using the control instructions.

3. The system of claim 1 or 2, wherein
the control component (306) is configured to execute a control program which is a backup version of a local control program executing on a local industrial controller that performs control of an automation system at an industrial facility, and
the device interface component (304) is further configured to monitor a health status of the local industrial controller and to cause the control component to assume control of the automation system in response to determining that the local industrial controller has faulted

4. The system of one of claims 1 to 3, further comprising a transform component configured to transform the device data to a common format prior to storage of the device data in the cloud-based storage, wherein the transform component is further configured to associated contextual information to the device data prior to storage of the device data in the cloud-based storage, and wherein the contextual information comprises at least one of information identifying a device from which the device data was received or information identifying a relationship or interdependency between two items of the device data.

5. The system of one of claims 1 to 4, wherein the device interface component (304) is configured to initiate collection of one or more defined data items on at least one of the industrial devices in response to determining that the one or more defined data items have an associated cloud processing tag, wherein collection is performed via one or more secure communication paths between the device interface component and the one or more defined data items.

6. The system of one of claims 1 to 5, wherein the interface component (304) is configured to collect device data from industrial devices comprising at least one of an industrial controller, a motor drive, a sensor, a meter, a human-machine interface, an industrial robot, a quality check system, or an industrial safety device.

7. A method (1700) for remotely operating one or more industrial automation systems, comprising:
collecting (1702), by a system comprising at least one processor, device data from industrial devices deployed at one or more industrial facilities;
storing (1704), by the system, the device data on cloud-based storage of a cloud platform;
processing (1706), by the system, the device data using a control program that executes on the cloud platform; and
sending (1708), by the system, a control instruction to at least one of the industrial devices based on outputs generated by the control program.
generating, by the system, one or more interface displays that allow a user to develop the control program via interaction with the one or more interface displays, wherein the one or more interface displays allow the user to define inputs and outputs of the control program using hierarchical tag names that identify the locations of data items of the one or more industrial facilities (204) corresponding to the tag names; and
rendering, by the system, the one or more interface displays to a client device; and
further comprising:
discovering, by the system, available data items distributed across the industrial devices;
indexing, by the system, the discovered data items in a federated data model on the cloud platform; and
rendering, by the system on the one or more interface displays, a browsable hierarchical search tree display that allows the user to browse the hierarchical tag names,
wherein the browsable hierarchical search tree display is generated from information indexed in the federated data model.

8. The method of claim 7, further comprising generating, by the system, the outputs of the control program to coordinate operations of respective automation systems at the one or more industrial facilities.

9. The method of claim 7 or 8, further comprising executing on a local industrial controller a local control program, wherein the control program is a duplicate version of the local control program, and the method further comprises:
monitoring, by the system, a health status of the local industrial controller; and
transitioning, by the system, control of the one or more industrial automation systems from local control by the local industrial controller to remote control by the control program in response to determining, based on the monitoring, that the local industrial controller has experienced a fault.

10. The method of one of claims 7 to 9, further comprising transforming, by the system, the device data to conform to a common format prior to storage of the device data in the cloud-based storage, wherein the transforming comprises associating contextual information to the device data prior to storage of the device data in the cloud-based storage, the contextual information comprising at least one of information identifying a device from which the device data was received or information identifying a relationship or interdependency between two items of the device data.

11. The method of one of claims 7 to 10, further comprising
determining, by the system, that one or more defined data items on at least one of the industrial devices are associated with a cloud processing tag; and
initiating, by the system, collection of the one or more data items in response to the determining.

12. A non-transitory computer-readable medium having stored thereon instructions that, in response to execution, cause a system comprising a processor to perform operations, the operations comprising the method of one of claims 7 to 11.

## Patentansprüche

1. System (302) zum Durchführen eines ferngesteuerten Industrieautomatisierungsbetriebs, umfassend:
einen Speicher, der ausführbare Komponenten speichert;
einen operativ mit dem Speicher gekoppelten Prozessor, der die ausführbaren Komponenten ausführt, wobei die ausführbaren Komponenten umfassen:
eine zum Sammeln von Gerätedaten von Industriegeräten (208, 210) in einer oder mehreren Industrieanlagen (204) und Speichern der Gerätedaten auf einem cloudbasierten Speicher einer Cloudplattform (202) ausgebildete Geräteschnittstellenkomponente (304);
eine zum Ausführen eines Steuerprogramms (502) auf der Cloudplattform (202) unter Verwendung der Gerätedaten als Programmvariablen ausgebildete Steuerkomponente (306),
wobei die Geräteschnittstellenkomponente (304) ferner zum Senden von Steueranweisungen an wenigstens eines der Industriegeräte (208, 210) auf der Basis von vom Steuerprogramm (502) erzeugten Ausgaben ausgebildet ist;
eine zum Erzeugen und Senden von einer oder mehreren Schnittstellenanzeigen, die einem Benutzer das Entwickeln des Steuerprogramms durch Interaktion mit der einen oder den mehreren Schnittstellenzeigen ermöglichen, an ein Clientgerät (506), wobei die eine oder mehreren Schnittstellenanzeigen dem Benutzer das Definieren von Eingaben und Ausgaben des Steuerprogramms (502) unter Verwendung von hierarchischen Tagnamen, welche die Positionen von Datenelementen der einen oder mehreren Industrieanlagen (204) entsprechend den Tagnamen identifizieren, ermöglichen, ausgebildete Clientschnittstellenkomponente (308), und
ein zum Ermitteln von über die Industriegeräte (208, 210) verteilten verfügbaren Datenelementen und zum Aufzeichnen der ermittelten Datenelemente in einem Verbunddatenmodell (518) auf der Cloudplattform (202) ausgebildetes Indexiersystem (902), wobei die eine oder mehreren Schnittstellenanzeigen eine durchsuchbare hierarchische Suchbaumanzeige zum Durchsuchen der hierarchischen Tagnahmen umfassen,
wobei die Clientschnittstellenkomponente (308) zum Erzeugen der durchsuchbaren hierarchischen Suchbaumanzeige aus im Verbunddatenmodell (518) indexierten Informationen ausgebildet ist.

2. System nach Anspruch 1, wobei die Schnittstellenkomponente (304) zum Sammeln von Gerätedaten von Industriegeräten umfassend Industriesteuergeräte, die eine lokale Steuerung von jeweiligen Automatisierungssystemen durchführen, ausgebildet ist und das Steuerprogramm zum Koordinieren von von den Industriegeräten unter Verwendung der Steueranweisungen durchgeführten Steueroperationen ausgebildet ist.

3. System nach Anspruch 1 oder 2, wobei
die Steuerkomponente (306) zum Ausführen eines Steuerprogramms ausgebildet ist, das eine Backupversion eines auf einem lokalen Industriesteuergerät, das die Steuerung eines Automatisierungssystems in einer Industrieanlage durchführt, ausgeführten lokalen Steuerprogramms ist, und
die Geräteschnittstellenkomponente (304) ferner zum Überwachen eines Intaktheitszustands des lokalen Industriesteuergeräts und zum Veranlassen der Steuerkomponente zum Übernehmen der Steuerung des Automatisierungssystems als Reaktion auf das Bestimmen, dass das lokale Industriesteuergerät defekt ist, ausgebildet ist.

4. System nach einem der Ansprüche 1 bis 3, ferner umfassend eine zum Umwandeln der Gerätedaten in ein gemeinsames Format vor dem Speichern der Gerätedaten im cloudbasierten Speicher ausgebildete Umwandlungskomponente, wobei die Umwandlungskomponente ferner zum Verknüpfen einer Kontextinformation mit den Gerätedaten vor dem Speichern der Gerätedaten im cloudbasierten Speicher ausgebildet ist und wobei die Kontextinformation eine Information zum Identifizieren eines Geräts, von dem die Gerätedaten empfangen werden, oder/und eine Information zum Identifizieren einer Beziehung oder gegenseitigen Abhängigkeit zwischen zwei Elementen der Gerätedaten umfasst.

5. System nach einem der Ansprüche 1 bis 4, wobei die Geräteschnittstellenkomponente (304) zum Anstoßen des Sammelns von einem oder mehreren definierten Datenelementen auf wenigstens einem der Industriegeräte als Reaktion auf das Bestimmen, dass das eine oder die mehreren definierten Datenelemente ein verknüpftes Cloudverarbeitungstag aufweisen, ausgebildet ist, wobei das Sammeln über einen oder mehrere sichere Kommunikationswege zwischen der Geräteschnittstellenkomponente und dem einen oder den mehreren definierten Datenelementen erfolgt.

6. System nach einem der Ansprüche 1 bis 5, wobei die Schnittstellenkomponente (304) zum Sammeln von Gerätedaten von Industriegeräten umfassend wenigstens ein Element der Gruppe umfassend ein Industriesteuergerät, einen Motorantrieb, einen Sensor, ein Messgerät, eine Mensch-Maschine-Schnittstelle, einen Industrieroboter, ein Qualitätsprüfsystem oder eine Industriesicherheitsvorrichtung ausgebildet ist.

7. Verfahren (1700) zur Fernbedienung von einem oder mehreren Industrieautomatisierungssystemen, umfassend:
Sammeln (1702) von Gerätedaten von in einer oder mehreren Industrieanlagen eingesetzten Industriegeräten durch ein System umfassend wenigstens einen Prozessor;
Speichern (1704) der Gerätedaten auf einem cloudbasierten Speicher einer Cloudplattform durch das System;
Verarbeiten (1706) der Gerätedaten unter Verwendung eines Steuerprogramms, das auf der Cloudplattform ausgeführt wird, durch das System; und
Senden (1708) einer Steueranweisung durch das System an wenigstens eines der Industriegeräte auf der Basis von vom Steuerprogramm erzeugten Ausgaben;
Erzeugen von einer oder mehreren Schnittstellenanzeigen durch das System, die einem Benutzer das Entwickeln des Steuerprogramme durch Interaktion mit der einen oder mehreren Schnittstellenzeigen ermöglichen, an ein Clientgerät, wobei die eine oder mehreren Schnittstellenanzeigen dem Benutzer das Definieren von Eingaben und Ausgaben des Steuerprogramms unter Verwendung von hierarchischen Tagnamen, welche die Positionen von Datenelementen der einen oder mehreren Industrieanlagen (204) entsprechend den Tagnamen identifizieren, ermöglichen; und
Übertragen der einen oder mehreren Schnittstellenanzeigen durch das System an ein Clientgerät; und ferner umfassend:
Ermitteln von über die Industriegeräte verteilten verfügbaren Datenelementen durch das System;
Indexieren der ermittelten Datenelemente durch das System in einem Verbunddatenmodell auf der Cloudplattform; und
Einblenden einer durchsuchbaren hierarchischen Suchbaumanzeige, die dem Benutzer das Durchsuchen der hierarchischen Tagnamen ermöglicht, durch das System in der einen oder den mehreren Schnittstellenanzeigen,
wobei die durchsuchbare hierarchische Suchbaumanzeige aus im Verbunddatenmodell indexierten Informationen erzeugt wird.

8. Verfahren nach Anspruch 7, ferner umfassend das Erzeugen der Ausgaben des Steuerprogramms durch das System zum Koordinieren von Operationen von jeweiligen Automatisierungssystemen in der einen oder den mehreren Industrieanlagen.

9. Verfahren nach Anspruch 7 oder 8, ferner umfassend das Ausführen eines lokalen Steuerprogramms auf einem lokalen Industriesteuergerät, wobei das Steuerprogramm eine Duplikatversion des lokalen Steuerprogramms ist und das Verfahren ferner umfasst:
Überwachen eines Intaktheitszustands des lokalen Industriesteuergeräts durch das System; und
Umschalten der Steuerung des einen oder der mehreren Industrieautomatisierungssysteme von lokaler Steuerung durch das lokale Industriesteuergerät zu Fernsteuerung durch das Steuerprogramm durch das System als Reaktion auf das Bestimmen, dass das lokale Industriesteuergerät einen Defekt aufweist, auf der Basis der Überwachung.

10. Verfahren nach einem der Ansprüche 7 bis 9, ferner umfassend das Umwandeln der Gerätedaten entsprechend einem gemeinsamen Format vor dem Speichern der Gerätedaten im cloudbasierten Speicher durch das System, wobei die Umwandlung das Verknüpfen einer Kontextinformation mit den Gerätedaten vor dem Speichern der Gerätedaten im cloudbasierten Speicher umfasst, wobei die Kontextinformation eine Information zum Identifizieren eines Geräts, von dem die Gerätedaten empfangen werden, oder/und eine Information zum Identifizieren einer Beziehung oder gegenseitigen Abhängigkeit zwischen zwei Elementen der Gerätedaten umfasst.

11. Verfahren nach einem der Ansprüche 7 bis 10, ferner umfassend:
Bestimmen durch das System, dass ein oder mehrere definierte Datenelemente auf wenigstens einer der Industriegeräte mit einem Cloudverarbeitungstag verknüpft sind; und
Anstoßen des Sammelns der einen oder mehreren Datenelemente durch das System als Reaktion auf das Bestimmen.

12. Nichtflüchtiges computerlesbares Medium, auf dem Anweisungen gespeichert sind, die als Reaktion auf das Ausführen ein System umfassend einen Prozessor zum Ausführen von Operationen veranlassen, wobei die Operationen das Verfahren von einem der Ansprüche 7 bis 11 umfassen.

## Revendications

1. Système (302) permettant d'effectuer une opération à distance d'automatisation industrielle, comprenant:
une mémoire qui stocke les composants exécutables;
un processeur, couplé opérationnellement à la mémoire, qui exécute les composants exécutables, les composants exécutables comprenant:
un composant d'interface de dispositif (304) configuré pour collecter des données de dispositif à partir de dispositifs industriels (208, 210) dans une ou plusieurs installations industrielles (204) et stocker les données de dispositif sur le stockage cloud d'une plate-forme cloud (202);
un composant de commande (306) configuré pour exécuter un programme de commande (502) sur la plate-forme cloud (202) en utilisant les données de l'appareil comme variables de programme,
dans lequel le composant d'interface de dispositif (304) est en outre configuré pour envoyer des instructions de commande à au moins un des dispositifs industriels (208, 210) sur la base des sorties générées par le programme de commande (502);
un composant d'interface client (308) configuré pour générer et envoyer, à un dispositif client (506), un ou plusieurs affichages d'interface qui permettent à un utilisateur de développer le programme de commande par interaction avec le ou les affichages d'interface, dans lequel le ou les affichages d'interface permettent à l'utilisateur de définir les entrées et les sorties du programme de commande (502) en utilisant des noms d'étiquettes hiérarchiques qui identifient les emplacements d'éléments de données de la ou des installations industrielles (204) correspondant aux noms d'étiquettes, et
un système d'indexation (902) configuré pour découvrir les éléments de données disponibles répartis sur les dispositifs industriels (208, 210), et pour enregistrer les éléments de données découverts dans un modèle de données fédérées (518) sur la plate-forme cloud (202), dans lequel l'un ou plusieurs des affichages de l'interface comprennent un affichage d'arbre de recherche hiérarchique navigable pour parcourir les noms de balises hiérarchiques,
dans lequel le composant d'interface client (308) est configuré pour générer l'affichage de l'arbre de recherche hiérarchique navigable à partir des informations indexées dans le modèle de données fédérées (518).

2. Système selon la revendication 1, dans lequel le composant d'interface (304) est configuré pour collecter des données de dispositifs industriels comprenant des dispositifs de commande industriels qui effectuent un commande local des systèmes d'automatisation respectifs, et le programme de commande est configuré pour coordonner les opérations de commande effectuées par les dispositifs de commande industriels en utilisant les instructions de commande.

3. Système selon les revendications 1 ou 2, dans lequel la composante de commande (306) est configurée pour exécuter un programme de commande qui est une version de sauvegarde d'un programme de commande local s'exécutant sur un dispositif de commande industriel local qui effectue le contrôle d'un système d'automatisation dans une installation industrielle, et
le composant d'interface de dispositif (304) est en outre configuré pour surveiller l'état de santé du dispositif de commande industriel local et pour faire en sorte que le composant de commande prenne le contrôle du système d'automatisation en réponse à la détermination d'une défaillance du dispositif de commande industriel local.

4. Système selon l'une des revendications 1 à 3, comprenant en outre un composant de transformation configuré pour transformer les données de dispositif en un format commun avant le stockage des données de dispositif dans le stockage cloud, dans lequel le composant de transformation est en outre configuré pour associer des informations contextuelles aux données de dispositif avant le stockage des données de dispositif dans le stockage cloud, et dans lequel les informations contextuelles comprennent au moins une des informations identifiant un dispositif à partir duquel les données de dispositif ont été reçues ou des informations identifiant une relation ou une interdépendance entre deux éléments des données de dispositif.

5. Système selon l'une des revendications 1 à 4, dans lequel le composant d'interface de dispositif (304) est configuré pour lancer la collecte d'un ou plusieurs éléments de données définis sur au moins l'un des dispositifs industriels en réponse à la détermination que l'un ou plusieurs éléments de données définis ont une étiquette de traitement cloud associée, dans lequel la collecte est effectuée via un ou plusieurs chemins de communication sécurisés entre le composant d'interface de dispositif et l'un ou plusieurs éléments de données définis.

6. Système de l'une des revendications 1 à 5, dans lequel le composant d'interface (304) est configuré pour collecter des données de dispositifs industriels comprenant au moins l'un d'un dispositif de commande industriel, d'un entraînement de moteur, d'un capteur, d'un compteur, d'une interface homme-machine, d'un robot industriel, d'un système de commande de qualité ou d'un dispositif de sécurité industriel.

7. Procédé (1700) pour exploiter à distance un ou plusieurs systèmes d'automatisation industrielle, comprenant:
la collecte (1702), par un système comprenant au moins un processeur, de données sur les appareils industriels déployés dans une ou plusieurs installations industrielles;
le stockage (1704), par le système, des données de l'appareil sur le stockage d'une plate-forme cloud;
le traitement (1706), par le système, des données de l'appareil à l'aide d'un programme de commande qui s'exécute sur la plate-forme cloud ; et
l'envoi (1708), par le système, d'une instruction de commande à au moins un des dispositifs industriels sur la base des sorties générées par le programme de commande.
la génération, par le système, d'un ou plusieurs affichages d'interface qui permettent à un utilisateur de développer le programme de commande par interaction avec un ou plusieurs affichages d'interface, dans lequel le ou les affichages d'interface permettent à l'utilisateur de définir les entrées et les sorties du programme de commande en utilisant des noms d'étiquettes hiérarchiques qui identifient les emplacements des élé-ments de données d'une ou plusieurs installations industrielles (204) correspondant aux noms d'étiquettes; et
la remise, par le système, du ou des affichages d'interface à un dispositif client ; et comprenant en outre
la découverte, par le système, des données disponibles réparties sur les appareils industriels;
l'indexation, par le système, des éléments de données découverts dans un modèle de données fédérées sur la plate-forme cloud;
et
la remise, par le système sur un ou plusieurs écrans d'interface, d'un affichage d'arbre de recherche hiérarchique navigable qui permet à l'utilisateur de parcourir les noms de balises hiérarchiques,
où l'affichage de l'arbre de recherche hiérarchique navigable est généré à partir des informations indexées dans le modèle de données fédérées.

8. Procédé selon de la revendication 7, comprenant en outre la génération, par le système, des sorties du programme de commande pour coordonner les opérations des systèmes d'automatisation respectifs dans une ou plusieurs installations industrielles.

9. Procédé selon les revendications 7 ou 8, comprenant en outre l'exécution sur un dispositif de commande industriel local d'un programme de commande local, dans lequel le programme de commande est une version dupliquée du programme de commande local, et le procédé comprend en outre:
la surveillance, par le système, de l'état de santé du dispositif de commande industriel local
la transition, par le système, du commande d'un ou de plusieurs systèmes d'automatisation industrielle du commande local par le dispositif de commande industriel local au commande à distance par le programme de commande en réponse à la détermination, sur la base de la surveillance, que le dispositif de commande industriel local a connu une défaillance.

10. Procédé selon l'une des revendications 7 à 9, comprenant en outre la transformation, par le système, des données de dispositif pour se conformer à un format commun avant le stockage des données de dispositif dans le stockage cloud, dans lequel la transformation comprend l'association d'informations contextuelles aux données de dispositif avant le stockage des données de dispositif dans le stockage cloud, les informations contextuelles comprenant au moins une des informations identifiant un dispositif à partir duquel les données de dispositif ont été reçues ou des informations identifiant une relation ou une interdépendance entre deux éléments des données de dispositif.

11. Procédé selon l'une des revendications 7 à 10, comprenant en outre les opérations suivantes:
déterminer, par le système, qu'un ou plusieurs éléments de données définis sur au moins un des dispositifs industriels sont associés à une étiquette de traitement dans le nuage ; et
initier, par le système, la collecte d'une ou plusieurs données en réponse à la détermination.

12. Support non transitoire lisible par ordinateur sur lequel sont stockées des instructions qui, en réponse à leur exécution, font qu'un système comprenant un processeur effectue des opérations, les opérations comprenant le procédé selon l'une des revendications 7 à 11.
